(19) Europäisches Patentamt
European Patent Office
Office européen des brevets

(11) EP 4 235 518 B1

(12) **EUROPEAN PATENT SPECIFICATION**

(45) Date of publication and mention of the grant of the patent:
**31.12.2025 Bulletin 2026/01**

(21) Application number: **22206928.8**

(22) Date of filing: **11.11.2022**

(51) International Patent Classification (IPC):
***G06N 7/00*** *(2023.01)* ***G06N 5/01*** *(2023.01)*

(52) Cooperative Patent Classification (CPC):
**G06N 7/00; G06N 5/01**

(54) **DATA PROCESSING PROGRAM, DATA PROCESSING DEVICE, AND DATA PROCESSING METHOD**

DATENVERARBEITUNGSPROGRAMM, DATENVERARBEITUNGSVORRICHTUNG UND DATENVERARBEITUNGSVERFAHREN

PROGRAMME DE TRAITEMENT DE DONNÉES, DISPOSITIF DE TRAITEMENT DE DONNÉES ET PROCÉDÉ DE TRAITEMENT DE DONNÉES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.02.2022 JP 2022026770**

(43) Date of publication of application:
**30.08.2023 Bulletin 2023/35**

(73) Proprietor: **FUJITSU LIMITED**
**Kawasaki-shi, Kanagawa 211-8588 (JP)**

(72) Inventors:
- **Watanabe, Yasuhiro**
  **Kawasaki-shi, Kanagawa, 211-8588 (JP)**
- **Tamura, Hirotaka**
  **Yokohama-shi, Kanagawa, 223-0066 (JP)**

(74) Representative: **Hoffmann Eitle**
**Patent- und Rechtsanwälte PartmbB**
**Arabellastraße 30**
**81925 München (DE)**

(56) References cited:
**US-A1- 2020 401 738** **US-A1- 2021 049 475**

- **DABIRI KEIVAN ET AL: "Replica Exchange MCMC Hardware With Automatic Temperature Selection and Parallel Trial", IEEE TRANSACTIONS ON PARALLEL AND DISTRIBUTED SYSTEMS, IEEE, USA, vol. 31, no. 7, 5 March 2020 (2020-03-05), pages 1681 - 1692, XP011776259, ISSN: 1045-9219, [retrieved on 20200304], DOI: 10.1109/TPDS.2020.2972359**
- **HIDENORI GYOTEN ET AL: "Enhancing the solution quality of hardware ising-model solver via parallel tempering", COMPUTER-AIDED DESIGN, ACM, 2 PENN PLAZA, SUITE 701NEW YORKNY10121-0701USA, 5 November 2018 (2018-11-05), pages 1 - 8, XP058417743, ISBN: 978-1-4503-5950-4, DOI: 10.1145/3240765.3240806**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 235 518 B1

## Description

FIELD

The embodiments discussed herein are related to a data processing program, a data processing device, and a data processing method.

BACKGROUND

A data processing device may be used to solve a combinatorial optimization problem. The data processing device converts the combinatorial optimization problem into an energy function of an Ising model, which is a model representing a spin behavior of a magnetic body, and searches for a combination that minimizes a value of the energy function among combinations of values of state variables included in the energy function. The combination of the values of the state variables that minimizes the value of the energy function corresponds to a ground state or an optimal solution represented by a set of the values of the state variables. Note that, hereinafter, the value of the energy function may be referred to as energy.

Examples of a method for obtaining an approximate solution for the combinatorial optimization problem in a practical time include a simulated annealing (SA) method or a replica exchange method based on a Markov-Chain Monte Carlo (MCMC) method.

To efficiently solve (search for solution) the combinatorial optimization problem, it is considered to increase parallelism of solution search processing. For example, a data processing device has been proposed that, in one trial (processing of one Monte Carlo step) for determining a state variable of which a value is updated, determines whether or not to allow the update of each state variable based on an energy change amount caused by the update for a plurality of state variables in parallel.

However, even when the calculation of the energy change amounts of the plurality of state variables and the determination processing are performed in parallel and the update of a large number of state variables is allowed, the number of state variables updated in each trial is one based on the principle for minimizing the Ising-type energy function according to the MCMC method. Therefore, when a problem scale increases, there is a possibility that unnecessary calculation increases and an arithmetic operation amount increases.

In order to reduce waste of the arithmetic operation amount, a method has been proposed for dividing the combinatorial optimization problem into a plurality of subproblems and performing the trials described above for the respective subproblems in parallel (hereinafter, referred to as partial parallel trial).

Examples of the related art include Japanese Laid-open Patent Publication No. 2020-46997, Japanese Laid-open Patent Publication No. 2021-33341, and Japanese Laid-open Patent Publication No. 2021-131695.

US 2020/401 738 A1 describes an information processing device including: a memory; and a plurality of processors each configured to: store a coupling coefficient for each set of a state variable that is a change candidate and another state variable among state variables included in an evaluation function indicating an energy value, values of the state variables, and values of local fields corresponding to the state variables; calculate a change value of the energy value, changes the value of the state variable according to determination whether or not the value of the state variable is changed, and updates the value of the local field of the other state variable; updates a score value according to the energy value and the temperature value; and select a set of the values of the state variables held by a predetermined number of processors fewer than the number of the processors.

Dabiri Keivan et al. "Replica Exachange MCMC Hardware With Automatic Temperature Selection and Parallel Trial" EEE TRANSACTIONS ON PARALLEL AND DISTRIBUTED SYSTEMS, IEEE, USA, vol. 31, no. 7, 5 March 2020 (2020-03-05), pages 1681-1692,

SUMMARY

TECHNICAL PROBLEM

In the partial parallel trial, there is a possibility that a sufficient solving performance cannot be achieved, depending on the number of state variables for which trials are performed in parallel (hereinafter, may be referred to as parallel trial bit number). For example, depending on a problem, in a case where the parallel trial bit number is reduced, there is a case where the number of state variables that are allowed to be updated is too small, it is difficult to select an appropriate state variable as an update target when energy is minimized, and an appropriate state transition becomes less likely to occur.

In one aspect, an object of the embodiment is to provide a program, a data processing device, and a data processing method that can improve a performance for solving a combinatorial optimization problem.

SOLUTION TO PROBLEM

The above problem is solved by the subject matter of the independent claims. Examples and technical descriptions of apparatuses, products and/or methods in the description and/or drawings which are not covered by the claims are presented not as embodiments of the invention but as background art or examples useful for understanding the invention.

In one aspect, the embodiment can improve a performance for solving a combinatorial optimization problem.

BRIEF DESCRIPTION OF DRAWINGS

FIG. 1 is a diagram for explaining a data processing device according to a first embodiment;
FIG. 2 is a diagram illustrating a hardware example of a data processing device according to a second embodiment;
FIG. 3 is a diagram illustrating a functional example of the data processing device;
FIG. 4 is a diagram illustrating an example of a module processing unit;
FIG. 5 is a diagram illustrating a functional example of local-field update by the module processing unit;
FIG. 6 is a diagram illustrating a first example of processing of a replica according to a determined group configuration;
FIG. 7 is a diagram illustrating a second example of the processing of the replica according to the determined group configuration;
FIG. 8 is a diagram illustrating an example of pipeline processing;
FIG. 9 is a diagram illustrating an example of reading a weighting coefficient;
FIG. 10 is a flowchart illustrating an example of a processing procedure of the data processing device;
FIG. 11 is a flowchart illustrating an example of a procedure for collecting and recording search information;
FIG. 12 is a flowchart illustrating a first example of a procedure of processing for determining a parallel trial bit number P;
FIG. 13 is a flowchart illustrating a second example of the procedure of the processing for determining the parallel trial bit number P;
FIG. 14 is a flowchart illustrating a third example of the procedure of the processing for determining the parallel trial bit number P; and
FIG. 15 is a flowchart illustrating an example of a parallel processing procedure by four groups.

DESCRIPTION OF EMBODIMENTS

Hereinafter, modes for carrying out embodiments will be described with reference to the drawings.

[First Embodiment]

A first embodiment will be described.

FIG. 1 is a diagram for explaining a data processing device according to the first embodiment.

A data processing device 10 searches for a solution for a combinatorial optimization problem by using the MCMC method, and outputs the searched solution. For example, the data processing device 10 uses a SA method, a replica exchange method, or the like based on the MCMC method to search for a solution. The data processing device 10 includes a storage unit 11 and a processing unit 12.

The storage unit 11 may be a volatile storage device such as a random access memory (RAM), or may be a nonvolatile storage device such as a flash memory. The storage unit 11 may include an electronic circuit such as a register. The processing unit 12 may be an electronic circuit such as a central processing unit (CPU), a digital signal processor (DSP), an application specific integrated circuit (ASIC), a field programmable gate array (FPGA), or a graphics processing unit (GPU). The processing unit 12 may be a processor that executes a program. The "processor" includes a set of a plurality of processors (multiprocessor) capable of parallel execution.

The combinatorial optimization problem is formulated by an Ising-type energy function, and is replaced with a problem that minimizes a value of an energy function, for example. The energy function may be referred to as an objective function, an evaluation function, or the like. The energy function includes a plurality of state variables. The state variable is a binary variable that takes a value of zero or one. The state variable may be expressed as a bit. A solution for the combinatorial optimization problem is represented by values of the plurality of state variables (hereinafter, may be referred to as state vector). A solution that minimizes a value of the energy function represents a ground state of an Ising model and corresponds to an optimal solution for the combinatorial optimization problem. The value of the energy function is expressed as energy.

The Ising-type energy function is represented by the formula (1).
[Expression 1]

$$E(x) = -\sum_{\langle i,j \rangle} W_{ij} x_i x_j - \sum_{i=1} b_i x_i \qquad (1)$$

A state vector x has a plurality of state variables as elements and represents a state of the Ising model. The formula (1) is an energy function formulated in a quadratic unconstrained binary optimization (QUBO) format. Note that, in a case of a problem that maximizes the energy, it is sufficient to reverse the sign of the energy function.

A first term on a right side of the formula (1) is to integrate products of values of two state variables with a weighting coefficient without omission and duplication for all combinations of two state variables that may be selected from among all state variables. Subscripts i and j are indices of the state variables. An i-th state variable is denoted by $x_i$. A j-th state variable is denoted by $x_j$. The reference $W_{ij}$ indicates a weight between the i-th state variable and the j-th state variable, or a weighting coefficient indicating coupling strength. $W_{ij} = W_{ji}$ and $W_{ii} = 0$ are satisfied.

A second term on the right side of the formula (1) is to obtain a total sum of products of respective biases for all state variables and the values of the state variables. A bias for the i-th state variable is indicated by $b_i$. Problem information including weighting coefficients, biases, or the like included in the energy function is stored in the storage unit 11.

When a value of the state variable $x_i$ changes to $1 - x_i$, an increment of the state variable $x_i$ can be expressed as $\delta x_i = (1 - x_i) - x_i = 1 - 2x_i$. Therefore, with respect to an energy function E(x), an energy change amount $\Delta E_i$ due to a change in the state variable $x_i$ is represented by the formula (2).
[Expression 2]

$$\Delta E_i = -\delta x_i \Big( \sum_j W_{ij} x_j + b_i \Big) = -\delta x_i h_i \qquad (2)$$

The reference $h_i$ is referred to as a local field and is represented by the formula (3). The local field may be referred to as a local field (LF).
[Expression 3]

$$h_i = \sum_j W_{ij} x_j + b_i \qquad (3)$$

A change amount $\delta h_i^{(j)}$ of the local field $h_i$ when the state variable $x_j$ changes is represented by the formula (4).
[Expression 4]

$$\delta h_i^{(j)} = \begin{cases} +W_{ij} & for \quad x_j = 0 \rightarrow 1 \\ -W_{ij} & for \quad x_j = 1 \rightarrow 0 \end{cases} \qquad (4)$$

The storage unit 11 holds the local field $h_i$ corresponding to each of the plurality of state variables. The processing unit 12 $h_i$ corresponding to a state after bit inversion is obtained by adding the change amount $\delta h_i^{(j)}$ to $h_i$ when the value of the state variable $x_j$ changes.

The processing unit 12 uses the Metropolis method or the Gibbs method to determine whether or not accept a state transition in which the energy change amount becomes $\Delta E_i$, for example, the change of the value of the state variable $x_i$ in search for a solution. For example, in neighbor search for searching for a transition from a certain state to another state where energy is lower than energy in the certain state, the processing unit 12 probabilistically accepts a transition to not only a state where the energy is decreased but also a state where the energy is increased. For example, a probability A, at which the change of the value of the state variable that causes $\Delta E$ is accepted, is represented by the formula (5).
[Expression 5]

$$A(\Delta E) = \begin{cases} \min[1, \exp(-\beta \cdot \Delta \mathrm{E}] & \text{Metropolis} \\ 1/[1 + \exp(\beta \cdot \Delta \mathrm{E})] & \text{Gibbs} \end{cases} \quad (5)$$

The reference $\beta$ indicates a reciprocal ($\beta = 1 / T$) of a parameter T ($T > 0$) indicating a temperature and is referred to as an inverse temperature. A min operator indicates that a minimum value of arguments is taken. An upper right side of the formula (5) corresponds to the Metropolis method. A lower right side of the formula (5) corresponds to the Gibbs method. The processing unit 12 compares A with a uniform random number u for which $0 < u < 1$ holds with respect to a certain index i, and when $u < A$ holds, accepts the change of the value of the state variable $x_i$ and changes the value of the state variable $x_i$. When $u < A$ does not hold, the processing unit 12 does not accept the change of the value of the state variable $x_i$ and does not change the value of the state variable $x_i$. According to the formula (5), the larger the value of $\Delta E$ is, the smaller A becomes. Furthermore, as $\beta$ is smaller, for example, T is larger, a state transition where $\Delta E$ is large is easier to be allowed. For example, in a case where the Metropolis method is used, the processing unit 12 may make a transition determination by using the formula (6) which is a modification of the formula (5).
[Expression 6]

$$ln(u) \times T \leq -\Delta E \quad (6)$$

For example, the processing unit 12 accepts the change of the value of the state variable in a case where $\Delta E$ satisfies the formula (6) for the uniform random number u ($0 < u \leq 1$). The processing unit 12 does not accept the change of the value of the state variable in a case where $\Delta E$ does not satisfy the formula (6) for the uniform random number u.

In the data processing device 10 according to the first embodiment, the processing unit 12 determines a state variable of which a value is changed (hereinafter, referred to as state variable to be updated) through partial parallel trials for a parallel trial bit number. Moreover, the processing unit 12 has a function for changing the parallel trial bit number.

FIG. 1 illustrates a flow of a part of processing executed by the processing unit 12.

(S1) First, the processing unit 12 executes, for example, search processing using a parallel trial bit number P1.

When the number of state variables included in the energy function is assumed to be N, in the processing in step S1, the processing unit 12 determines whether or not to accept the change of the value of the variable (including $\Delta E$ calculation processing) in parallel, for P1 state variables selected from among $x_1$ to $x_N$. Furthermore, the processing unit 12 changes of a value of a state variable to be updated that is one of the state variables (hereinafter, referred to update candidate state variable) of which the change of the value is determined to be accepted through the determination described above for the P1 state variables. In a case where there is a plurality of update candidate state variables, one state variable is selected as a state variable to be updated randomly or according to a predetermined rule.

Note that, if the number of update candidate state variables is often zero, a state transition does not occur, and a calculation time is wasted. Therefore, the processing unit 12 may constantly change a value of one state variable from among the P1 state variables in each partial parallel trial. This method is referred to as a rejection-free method below.

In a case where the rejection-free method is used, it is sufficient for the processing unit 12 to generate a uniform random number u [i] for each state variable $x_i$ belonging to the P1 state variables and to select $x_i$ that minimizes max (0, $\Delta E_i$) + Tlog (- log (u [i])) as an update target. Note that a max operator indicates that a maximum value of the arguments is taken. For example, in a case where the number of update candidate state variables is zero, the processing unit 12 may select one state variable to be updated according to the rejection-free method.

The processing unit 12 executes the processing described above while changing the selected P1 state variables so as to search for a solution. In the example in FIG. 1, each of $x_1$ to $x_N$ is divided into regions (expressed as parallel trial region in FIG. 1) A1 to An each including the P1 state variables. For example, search is performed sequentially from the region A1 to the region An. Note that each region may include the same state variable. Furthermore, after the search has been performed up to the region An, the search may be performed again from the region A1.

(S2) For example, in a case where the search processing described above is executed for a predetermined period, the processing unit 12 changes the number of state variables (parallel trial bit number) to be selected in the partial parallel trial from P1 to P2, based on search information indicating a search status of the search processing in step S1.

The search information indicating the search status may be, for example, a cumulative value of the number of update candidate state variables obtained by the search processing for the predetermined period or may be a cumulative value of the number of state variables of which values have been actually changed. Furthermore, the search information may be a movement amount (represented by Hamming distance) of the state vector represented by a set of $x_1$ to $x_N$, whether or not the minimum value of the energy is updated (or the number of updates), or the like in the search processing for the predetermined period. Note that the processing unit 12 may perform search by specifying an appropriate parallel trial bit number based on the search information that is a record regarding the parallel trial bit number in search in processing for searching another combinatorial optimization problem performed in the past.

The search information described above is stored in the storage unit 11 at the time of the search processing in step S1.

In the processing in step S2, for example, the processing unit 12 calculates an average value of the number of update candidate state variables in each partial parallel trial from a cumulative value of the number of the update candidate state variables obtained through the search processing for the predetermined period. Then, for example, if the average value is smaller than a first threshold, the processing unit 12 changes P1 to P2 that is larger than P1. In a case where the number of update candidate state variables is small, it is difficult to select an appropriate state variable as an update target when energy is minimized, and there is a possibility that a solving performance deteriorates. Therefore, in order to promote an appropriate state transition and improve the solving performance, the parallel trial bit number is increased as described above. If the average value described above is larger than a second threshold (> first threshold), the processing unit 12 changes P1 to P2 that is smaller than P1. This is because, even if the number of update candidate state variables is too large, one state variable to be updated is selected, and accordingly, unnecessary calculation increases, and an arithmetic operation amount increases.

An example of a method for adjusting the parallel trial bit number in a case where other search information is used will be described later (refer to FIGs. 13 and 14).

(S3) After changing in the parallel trial bit number, the processing unit 12 executes search processing using the parallel trial bit number P2. The processing in step S3 is executed similarly to the processing in step S1 described above. In the example in FIG. 1, an example is illustrated in which the number of regions B1 to Bm including P2 state variables for $x_1$ to $x_N$ is m (< n). For example, search is sequentially performed from the region B1 to the region Bm. Note that each region may include the same state variable. Furthermore, after the search has been performed up to the region Bm, the search may be performed again from the region B1.

In a case where the search processing in step S3 is executed for a predetermined period, the processing unit 12 may execute the processing in step S2 based on the search information indicating the search status of the search processing in step S3, further change the parallel trial bit number, and repeat the search processing.

Note that the processing unit 12 may execute the search processing described above for a plurality of replicas in parallel, using the plurality of replicas respectively indicating a plurality of state variables. Note that an example of the search processing using the plurality of replicas will be described in a second embodiment.

In a case where the SA method is performed in the processing in steps S1 and S3, the processing unit 12 reduces a value of T that is a parameter indicating a temperature, according to a predetermined temperature parameter change schedule, for example, each time when the partial parallel trial is repeated a predetermined number of times. Then, the processing unit 12 outputs, for example, a state vector obtained in a case where the partial parallel trial is repeated the predetermined number of times as a calculation result of the combinatorial optimization problem (for example, may display on display device that is not illustrated). Note that, each time when the value of the state variable changes, the processing unit 12 may update the value of the energy function (energy) represented by the formula (1) and may make the storage unit 11 hold energy and a state in a case of the minimum energy up to this point. In that case, for example, the processing unit 12 may output a state corresponding to the minimum energy stored after the partial parallel trial is repeated the predetermined number of times as a calculation result.

In a case where the processing unit 12 performs the replica exchange method, the processing unit 12 executes the processing in steps S1 to S3 described above for each of the plurality of replicas to which different values of T are respectively set. Note that, although a specific example will be described later, the same parallel trial bit number may be set to each replica, or different parallel trial bit numbers may be respectively set to the multiple replicas. The processing unit 12 exchanges the replica each time when the partial parallel trial is repeated the predetermined number of times. For example, the processing unit 12 selects two replicas having adjacent T values and exchanges the values of T or the states between the selected two replicas at a predetermined exchange probability based on an energy difference or a T value difference between the replicas. For example, the processing unit 12 updates the value of the energy function (energy) each time when the value of the state variable for each replica is changed and stores energy and a state in a case of the minimum energy up to this point in the storage unit 11. Then, for example, the processing unit 12 outputs a state corresponding to the minimum energy in all the replicas, among the minimum energy stored after the partial parallel trial described above is repeated the predetermined number of times in each replica, as a calculation result.

The data processing device 10 according to the first embodiment described above changes the parallel trial bit number of the partial parallel trial (the number of state variables used to determine whether or not to accept value change in parallel) based on the search information. As a result, it is possible to set the parallel trial bit number according to the search status that reflects characteristics of the problem, and the arithmetic operation amount used to change the value of the one state variable is optimized, and it is possible to improve a solving performance for a large-scale problem.

Furthermore, in addition to the optimization of the arithmetic operation amount, by changing the parallel trial bit number as described above, in a case where a value of one state variable changes, a period before the state variable becomes a state variable of which a change of a value is accepted next (to be update candidate) can be adjusted. As a result, it is possible to avoid a situation where, when a state escapes from a local solution by changing the value of the state variable, the value of the state variable changes again and the state is constrained to the local solution again.

[Second Embodiment]

Next, a second embodiment will be described.

FIG. 2 is a hardware example of a data processing device according to the second embodiment.

A data processing device 20 is a computer that searches for a solution for a combinatorial optimization problem using the MCMC method and outputs the searched solution. The data processing device 20 includes a CPU 21, a RAM 22, a hard disk drive (HDD) 23, a GPU 24, an input interface 25, a medium reader 26, a network interface card (NIC) 27, and an accelerator card 28.

The CPU 21 is a processor that executes a program command. The CPU 21 loads at least a part of a program and data stored in the HDD 23 into the RAM 22 to execute the program. Note that the CPU 21 may include a plurality of processor cores. Furthermore, the data processing device 20 may include a plurality of processors. Processing described below may be executed in parallel by using a plurality of processors or processor cores. Furthermore, a set of the plurality of processors may be referred to as a "multiprocessor" or simply a "processor".

The RAM 22 is a volatile semiconductor memory that temporarily stores a program executed by the CPU 21 and data used by the CPU 21 for arithmetic operations. Note that the data processing device 20 may include a memory of a type other than the RAM, or may include a plurality of memories.

The HDD 23 is a nonvolatile storage device that stores programs for software such as an operating system (OS), middleware, or application software and data. Note that the data processing device 20 may include another type of storage device such as a flash memory or a solid state drive (SSD), or may include a plurality of nonvolatile storage devices.

The GPU 24 outputs an image to a display 101 connected to the data processing device 20 according to a command from the CPU 21. As the display 101, any type of display such as a cathode ray tube (CRT) display, a liquid crystal display (LCD), a plasma display, or an organic electro-luminescence (OEL) display may be used.

The input interface 25 acquires an input signal from an input device 102 connected to the data processing device 20, and outputs the input signal to the CPU 21. As the input device 102, a pointing device such as a mouse, a touch panel, a touch pad, or a trackball, a keyboard, a remote controller, a button switch, or the like may be used. Furthermore, a plurality of types of input devices may be connected to the data processing device 20.

The medium reader 26 is a reading device that reads a program and data recorded on a recording medium 103. As the recording medium 103, for example, a magnetic disk, an optical disk, a magneto-optical disk (MO), a semiconductor memory, or the like can be used. The magnetic disk includes a flexible disk (FD) and an HDD. The optical disk includes a compact disc (CD) and a digital versatile disc (DVD).

The medium reader 26 copies, for example, a program or data read from the recording medium 103 to another recording medium such as the RAM 22 or the HDD 23. The read program is executed by, for example, the CPU 21. Note that the recording medium 103 may be a portable recording medium and may be used for distribution of the program and the data. Furthermore, the recording medium 103 and the HDD 23 may be referred to as computer-readable recording media.

The NIC 27 is an interface that is connected to a network 104 and communicates with another computer via the network 104. The NIC 27 is connected to a communication device such as a switch or a router with a cable, for example. The NIC 27 may be a wireless communication interface.

The accelerator card 28 is a hardware accelerator that searches for a solution for the problem represented by the Ising-type energy function in the formula (1) by using the MCMC method. By performing the MCMC method at a fixed temperature or the replica exchange method in which a state of an Ising model is exchanged between a plurality of temperatures, the accelerator card 28 may be used as a sampler to sample a state according to a Boltzmann distribution at the temperature. The accelerator card 28 executes annealing processing such as the replica exchange method and the SA method for gradually lowering the T value in order to solve the combinatorial optimization problem.

The SA method is a method for efficiently finding an optimal solution by sampling a state according to the Boltzmann distribution at each T value and lowering T used for sampling from a high temperature to a low temperature, for example, increasing an inverse temperature $\beta$. By changing the state to some extent even on a low temperature side, for example, even in a case where $\beta$ is large, there is an increasing possibility that a good solution may be found even when the T value is lowered quickly. For example, in a case where the SA method is used, the accelerator card 28 repeats an operation for lowering the T value after repeating a trial of a state transition at a fixed T value a certain number of times.

The replica exchange method is a method for independently performing the MCMC method by using the plurality of T values, and appropriately exchanging the T values (or state) for the states obtained at the respective T values. A good solution may be efficiently found by searching a narrow range of a state space through the MCMC at a low temperature and searching a wide range of the state space through the MCMC at a high temperature. For example, in a case where the replica exchange method is used, the accelerator card 28 repeats an operation for performing trials of a state transition at each of the plurality of T values in parallel, and exchanging T values with a predetermined exchange probability for states obtained at the respective T values each time when a certain number of times of trials are performed.

The accelerator card 28 includes an FPGA 28a. The FPGA 28a implements a search function of the accelerator card 28. The search function may be implemented by another type of electronic circuit such as a GPU or an ASIC. The FPGA 28a includes a memory 28b. The memory 28b holds data such as problem information used for search by the FPGA 28a, a solution searched for by the FPGA 28a, the search information indicating the search status, or the like. The FPGA 28a may include a plurality of memories including the memory 28b.

The FPGA 28a is an example of the processing unit 12 according to the first embodiment. The memory 28b is an example of the storage unit 11 according to the first embodiment. Note that the accelerator card 28 may include a RAM outside the FPGA 28a, and data stored in the memory 28b may be temporarily saved in the RAM according to processing of the FPGA 28a.

A hardware accelerator that searches for a solution for a problem in an Ising format, as the accelerator card 28, may be referred to as an Ising machine, a Boltzmann machine, or the like.

The accelerator card 28 performs, in parallel, solution search by using a plurality of replicas. The replica indicates a plurality of state variables included in an energy function. In the following description, the state variable is expressed as a bit. Each bit included in the energy function is associated with an integer index and is identified according to the index.

FIG. 3 is a diagram illustrating a functional example of a data processing device.

The data processing device 20 includes an overall control unit 30, M (M is integer equal to or more than two) modules (can be referred to as circuit unit) 31a1, 31a2, ..., and 31aM, a search information aggregation unit 32, and a selector 33. The overall control unit 30, the modules 31a1 to 31aM, the search information aggregation unit 32, and the selector 33 are implemented using the electronic circuit of the FPGA 28a and the memory 28b.

The overall control unit 30 controls the modules 31a1 to 31aM, the search information aggregation unit 32, and the selector 33. Furthermore, the overall control unit 30 receives search information collected by the search information aggregation unit 32 and determines a parallel trial bit number P. Then, the overall control unit 30 determines a group configuration of the modules 31a1 to 31aM to be described later, based on the determined P and supplies group configuration information indicating the determined group configuration to the selector 33.

Moreover, the overall control unit 30 updates a state vector of each replica held by the storage unit, based on a flip bit index of each group, supplied from the selector 33. The flip bit index is an index of a bit to be updated (hereinafter, referred to as flip bit).

Furthermore, the overall control unit 30 may update energy of each replica by adding $\Delta E$ corresponding to the index to energy held by an energy holding unit that holds the energy corresponding to a current state vector of each replica. Note that, in FIG. 3, the storage unit that holds the current state vector corresponding to each replica and the energy holding unit that holds the energy corresponding to the current state vector of each replica are omitted. The storage unit and the energy holding unit may be implemented by, for example, a storage region of the memory 28b in the FPGA 28a, or may be implemented by a register.

Furthermore, the overall control unit 30 supplies control information, the group configuration information, and information regarding a flip bit (hereinafter, referred to as flip bit information) to the modules 31a1 to 31aM. The flip bit information includes, for example, a flip bit index and an inversion direction of a flip bit (information indicating inversion from zero to one or inversion from one to zero).

The modules 31a1 to 31aM respectively include module control units 31b1, 31b2, ..., and 31bM and module processing units 31c1, 31c2, ..., and 31cM.

The module control units 31b1 to 31bM receive the control information, the group configuration information, and the flip bit information from the overall control unit 30 and controls pipeline control in the modules 31a1 to 31aM, processing for updating a local field of each replica, or the like.

The modules 31a1 to 31aM are appropriately combined based on the parallel trial bit number P and are grouped into n (n is integer equal to or more than two) groups. The n groups each including one or a plurality of modules perform the partial parallel trial with the parallel trial bit number P, for each n replicas among the plurality of replicas, for each unit processing period. Furthermore, the module processing units 31c1 to 31cM send the search information indicating the search status to the search information aggregation unit 32. An example of the module processing units 31c1 to 31cM will be described later.

The search information aggregation unit 32 collects the search information and sends the collected search information to the overall control unit 30.

The selector 33 changes a selector configuration, based on the group configuration information received from the overall control unit 30. Then, in a case where a plurality of indices of update candidate bits (hereinafter, referred to as flip candidate bit) is included in each group, the selector 33 selects one for each group in parallel. Then, the selector 33 outputs the selected index as a flip bit index and supplies the selected index to the overall control unit 30.

Hereinafter, a case of the number of modules M = 8 will be described. However, the number is not limited to this.

FIG. 4 is a diagram illustrating an example of the module processing unit. Note that, in FIG. 4, illustration of the overall control unit 30, the module control units 31b1 to 31bM, and the search information aggregation unit 32 illustrated in FIG. 3 is omitted.

In the example in FIG. 4, the data processing device 20 includes the module processing units 31c1 to 31c8.

The module processing unit 31c1 includes a memory unit 40a, h calculation units 40b1 to 40bK, ΔE calculation units 40c1 to 40cK, a selector 40d, and a search information acquisition unit 40e. The other module processing units 31c2 to 31c8 have similar configurations. For example, the module processing unit 31c2 includes a memory unit 41a, h calculation units 41b1 to 41bK, ΔE calculation units 41c1 to 41cK, a selector 41d, and a search information acquisition unit 41e. The module processing unit 31c3 includes a memory unit 42a, h calculation units 42b1 to 42bK, ΔE calculation units 42c1 to 42cK, a selector 42d, and a search information acquisition unit 42e. The module processing unit 31c4 includes a memory unit 43a, h calculation units 43b1 to 43bK, ΔE calculation units 43c1 to 43cK, a selector 43d, and a search information acquisition unit 43e. The module processing unit 31c5 includes a memory unit 44a, h calculation units 44b1 to 44bK, ΔE calculation units 44c1 to 44cK, a selector 44d, and a search information acquisition unit 44e. The module processing unit 31c8 includes a memory unit 47a, h calculation units 47b1 to 47bK, ΔE calculation units 47c1 to 47cK, a selector 47d, and a search information acquisition unit 47e. The reference K is a bit number handled by each of the module processing units 31c1 to 31c8.

For example, the memory units 40a to 47a are implemented by the plurality of memories including the memory 28b, in the FPGA 28a. The h calculation units 40b1 to 47bK, the ΔE calculation units 40c1 to 47cK, the selector 40d to 47d, and the search information acquisition units 40e to 47e are implemented by the electronic circuit of the FPGA 28a.

In FIG. 4, names are expressed by adding a subscript n to the h calculation units 40b1 to 47bK as an "hn" calculation unit so that correspondence with an n-th bit is easily found. Similarly, in FIG. 4, names are expressed by adding a subscript n to the ΔE calculation units 44c1 to 44cK as a "ΔEn" calculation unit so that correspondence with the n-th bit is easily found.

For example, the h calculation unit 40b1 and the ΔE calculation unit 40c1 perform an arithmetic operation regarding a first bit of N bits. Furthermore, the h calculation unit 40bK and ΔE calculation unit 40cK perform an arithmetic operation regarding an i-th bit.

As described above, the modules 31a1 to 31aM are appropriately combined and grouped based on the parallel trial bit number P, and perform the partial parallel trial for a certain replica in each group.

In the example in FIG. 4, a case is illustrated where the module 31a1 is classified into a group A, the module 31a2 is classified into a group B, the modules 31a3 and 31a4 are classified into a group C, and the modules 31a5 to 31a8 are classified into a group D. In this case, a partial parallel trial with the parallel trial bit number P = K is performed in each of the groups A and B, a partial parallel trial with the parallel trial bit number P = K * 2 is performed in the group C, and a partial parallel trial with the parallel trial bit number P = K * 4 is performed in the group D.

The data processing device 20 performs the partial parallel trials for the plurality of replicas in parallel through n types of processing (pipelines) by n groups so as to make it possible to efficiently use arithmetic operation resources of the FPGA 28a. For example, in a case of the example in FIG. 4, the data processing device 20 processes a plurality of replicas in parallel with four pipelines corresponding to the groups A to D. In the present example, it is assumed that the number of replicas be 16. The 16 replicas are expressed as replicas R0, R1, ..., and R15.

Here, information stored in the memory units 40a to 47a will be described. Each of the memory units 40a to 47a stores a weighting coefficient $W = \{W_{\gamma, \delta}\}$ for each pair of a bit of an own group and another bit. When the number of bits of a state vector is N, a total number of weighting coefficients is $N^2$. $W_{\gamma, \delta} = W_{\delta, \gamma}$ is satisfied. $W_{\gamma, \gamma} = 0$ is satisfied. Since processing of each replica is processing for the same problem, if the number of replica increases, the total number of weighting coefficients to be stored does not change.

In the example in FIG. 4, the memory unit 40a stores weighting coefficients $W_{1, 1}$ to $W_{1, N}$, ..., and $W_{i, 1}$ to $W_{i, N}$. For example, the weighting coefficients $W_{1, 1}$ to $W_{1, N}$ are used for an arithmetic operation corresponding to the first bit of the N bits. The total number of weighting coefficients stored in the memory unit 40a is i * N. Note that, in a case where the number of bits handled by each of the module processing units 31c1 to 31c8 is K, i = K.

The memory unit 41a stores weighting coefficients $W_{i+1, 1}$ to $W_{i+1, N}$, ..., and $W_{j, 1}$ to $W_{j, N}$. The memory unit 42a stores weighting coefficients $W_{j+1, 1}$ to $W_{j+1, N}$, ..., and $W_{k, 1}$ to $W_{k, N}$. The memory unit 43a stores weighting coefficients $W_{k+1, 1}$ to $W_{k+1, N}$, ..., and $W_{l, 1}$ to $W_{l, N}$. The memory unit 44a stores weighting coefficients $W_{l+1, 1}$ to $W_{l+1, N}$, ..., and $W_{m, 1}$ to $W_{m, N}$. The memory unit 47a stores weighting coefficients $W_{o+1, 1}$ to $W_{o+1, N}$, ..., and $W_{N, 1}$ to $W_{N, N}$.

For example, indices of bits of which values are changed are supplied from the module control units 31b1 to 31bM to the memory units 40a to 47a. Then, weighting coefficients corresponding to the indices are read from the memory units 40a to 47a and are supplied to the h calculation units 40b1 to 47bK.

In a case where the number of groups is four as in FIG. 4, maximum of four indices are simultaneously supplied to the memory units 40a to 47a. As a result, maximum of four weighting coefficients are simultaneously supplied to each of the h calculation units 40b1 to 47bK. The four weighting coefficients correspond to four replicas.

In the following, the h calculation unit 40b1 and the ΔE calculation unit 40c1 corresponding to the first bit will be mainly described as examples. The other h calculation units and ΔE calculation units have similar functions.

The h calculation unit 40b1 calculates a local field $h_1$ for each of four replicas, processed in parallel, based on the formulas (3) and (4), using the weighting coefficient read from the memory unit 40a. For example, the h calculation unit 40b1 includes a register for holding the local field $h_1$ that is calculated for the replica at the previous time and updates $h_1$ of the replica stored in the replica by adding $\delta h_1$ of the replica to $h_1$. Note that a signal indicating an inversion direction of a bit indicated by an index to be inverted for each replica is supplied from the module control unit 31b1 to the h calculation unit 40b1. An initial value of $h_1$ is calculated in advance with the formula (3) according to $b_1$ according to a problem and is set to the register of the h calculation unit 40b1 in advance.

The $\Delta$E calculation unit 40c1 calculates $\Delta E_1$ that is an energy change amount according to inversion of an own bit of the replica, based on the formula (2), using the local field $h_1$ of one replica to be processed next, held by the h calculation unit 40b1. The $\Delta$E calculation unit 40c1 may determine an inversion direction of the own bit, for example, from a current value of the own bit of the replica. For example, when the current value of the own bit is zero, a direction from zero to one is the inversion direction, and when the current value of the own bit is one, a direction from one to zero is the inversion direction. The $\Delta$E calculation unit 40c1 supplies the calculated $\Delta E_1$ to the selector 40d.

The selector 40d makes determination in the formula (6) for each $\Delta$E simultaneously supplied from the $\Delta$E calculation units 40c1 to 40cK and determines whether or not the bit can be inverted. For example, the selector 40d determines whether or not to allow inversion of a bit with an index = 1, based on the formula (6), for the energy change $\Delta E_1$ calculated by the $\Delta$E calculation unit 33a1. For example, the selector 40d determines whether or not the bit can be inverted for the replica, according to a comparison between - $\Delta E_1$ and a thermal noise according to T. The thermal noise corresponds to a product of a natural logarithmic value of a uniform random number u and T in the formula (6).

Moreover, the selector 40d randomly selects one of the flip candidate bits based on a random number according to the formula (6) and supplies an index corresponding to the selected bit to the selector 33. Note that, in a case where there is no bit that is determined to be invertible, the selector 40d does not need to output an index. However, in a case where the rejection-free method described above is used, an index of one bit is constantly output.

The selectors 41d to 47d function similarly to the selector 40d, for the bit processed by the own module.

The search information acquisition unit 40e acquires search information in the module 31a1. The search information acquisition unit 40e acquires, for example, the number of indices output from the selector 40d (corresponding to the number of flip candidate bits) as the search information. The search information acquisition unit 40e may acquire information such as the number of flip bits in each replica or an energy change amount as the search information.

The search information acquisition units 41e to 47e have similar functions to the search information acquisition unit 40e.

In a case where the module 31a1 is classified into the group A, the module 31a2 is classified into the group B, the modules 31a3 and 31a4 are classified into the group C, and the modules 31a5 to 31a8 are classified into the group D as described above, the selector 33 functions as follows.

Since the group A includes the one module 31a1, the selector 33 has a function (illustrated as "1-1 Select") for outputting an index output from the module processing unit 31c1 of the module 31a1. Since the group B includes the one module 31a2, the selector 33 has a function for outputting an index output from the module processing unit 31c2 of the module 31a2. The group C includes the two modules 31a3 and 31a4. Therefore, the selector 33 has a function (illustrated as "2-1 Select") for selecting and outputting an index output from either one of the module processing units 31c3 and 31c4 of the modules 31a3 and 31a4. The group D includes the four modules 31a5 to 31a8. Therefore, the selector 33 has a function (illustrated as "4-1 Select") for selecting and outputting an index output from any one of the module processing units 31c5 to 31c8 of the modules 31a5 to 31a8.

The selector 33 randomly selects one of the plurality of indices based on random numbers. Furthermore, the selector 33 may preferentially select any one index, based on selection weight information, for example, supplied from the selectors 40d to 47d. As the selection weight information, for example, the number of flip candidate bits can be used. In this case, an index output from the module processing unit having a large number of flip candidate bits is preferentially selected. Furthermore, in a case where the selectors 40d to 47d use the rejection-free method, a value max (0, $\Delta E_i$) + Tlog (- log (u [i])) corresponding to the bits selected by the selectors 40d to 47d can be used as the selection weight information. In that case, an index output from the module processing unit of which the value of max (0, $\Delta E_i$) + Tlog (- log (u [i])) decreases is preferentially selected.

Such a selector 33 can be implemented, for example, by using four 8-input 1-output gate circuit with enable. In the gate circuit that implements "1-1 Select", one input of the eight inputs is enabled by an enable signal (for example, included in group configuration information supplied from overall control unit 30). In the gate circuit that implements "2-1 Select", two inputs of the eight inputs are enabled by the enable signal. In the gate circuit that implements "4-1 Select", four inputs of the eight inputs are enabled by the enable signal. Then, the selection processing described above is executed.

FIG. 5 is a diagram illustrating a functional example of local-field update by the module processing unit. In FIG. 5, a functional example of local-field update in the module processing unit 31c1 of the module 31a1 is illustrated. Functions of the local-field update of the other module processing units 31c2 to 31cM are similar to the function of the local-field update of the module processing unit 31c1.

The memory unit 40a includes eight memories 40p1, 40p2, ..., and 40p8 corresponding to the number of modules M = 8. The memory 40p1 stores weighting coefficients $W_{1,1}$ to $W_{1,i}$, $W_{2,1}$ to $W_{2,i}$, ..., and $W_{i,1}$ to $W_{i,i}$. The memory 40p2 stores $W_{1,i+1}$ to $W_{1,j}$, $W_{2,i+1}$ to $W_{2,j}$, ..., and $W_{i,i+1}$ to $W_{i,j}$. The memory 40p8 stores $W_{1,k+1}$ to $W_{1,N}$, $W_{2,k+1}$ to $W_{2,N}$, ..., and $W_{i,k+1}$ to $W_{i,N}$.

Each of the h calculation units 40b1 to 40bK updates local fields corresponding to the own bits of the maximum of four replicas in parallel, based on the formulas (3) and (4), using the maximum of four weighting coefficients. For example, the h calculation unit 40b1 includes an h holding unit r1, selectors s10 to s13, and adders c1 to c4. The other h calculation units have a similar function to the h calculation unit 40b1. For example, the h calculation unit 40bK includes an h holding unit ri, selectors si0 to si3, and adders c5 to c8. Hereinafter, the h calculation unit 40b1 will be described.

The h holding unit r1 holds a local field of the own bit corresponding to each of the 16 replicas. The h holding unit r1 may include a flip-flop and may include four RAMs each of which reads 1 word per read. The own bit of the h calculation unit 40b1 is a bit of an index = 1.

The selector s10 selects four of the eight weighting coefficients read from the memories 40p1 to 40p8 and supplies each of the four selected weighting coefficients to any one of the adders c1 to c4. For example, the selector s10 can be implemented using four 8-input 1-output gate circuit with enable. In such a gate circuit, one of the eight inputs is enabled with an enable signal supplied from the module control unit 31b1 based on the group configuration information, and a weighting coefficient of the enabled input is output.

The selector s11 reads local fields of replicas to be updated processed in each group from the h holding unit r1, and supplies the local fields to the adders c1 to c4. The maximum number of local fields that are simultaneously read by the selector s11 from the h holding unit r1 is four.

The adders c1 to c4 update the local fields by adding the weighting coefficients output from the selector s10, to the local fields regarding the replicas processed in four groups supplied from the selector s11 and supply the local fields to the selector s12. A sign of the weighting coefficient can be determined, for example, according to the signal indicating the inversion direction of the bit supplied from the module control unit 31b1, as described above.

The selector s12 stores the local fields of the replicas updated by the adders c1 to c4 in the h holding unit r1.

The selector s13 reads the local field of the own bit of the replica to be processed next in the group A, to which the module 31a1 belongs, from the h holding unit r1 and supplies the local field to the ΔE calculation unit 40c1.

In this way, the h calculation unit 40b1 can simultaneously update the local fields corresponding to the index = 1, for the maximum of four replicas, by the selectors s10 to s12 and the adders c1 to c4.

With the configuration described above, the data processing device 20 executes maximum of four pipelines in parallel for the 16 replicas.

Next, an example of replica processing according to a group configuration determined by the overall control unit 30 will be described. Note that, in the following example, it is assumed that the number of stages of one pipeline, for example, the number of stages be four.

A first stage is ΔE calculation. The ΔE calculation is processing of calculating, in each group, ΔE for each bit belonging to the group in parallel.

A second stage is Flip determination. The Flip determination is processing for selecting one bit to be inverted, for ΔE of each bit calculated in parallel.

A third stage is W Read. The W Read is processing for reading weighting coefficients from the memory units 40a to 47a.

A fourth stage is h update. The h update is processing for updating the local field of the replica, based on the read weighting coefficient. Inversion of the bit to be inverted in the replica is performed in parallel with the h update stage. Therefore, it can be said that the h update stage is a bit update stage.

Note that the number of stages of the pipeline is not limited to four.

Furthermore, hereinafter, a period in which processing for one stage of the pipeline is executed is referred to as a one-step period.

FIG. 6 is a diagram illustrating a first example of processing of a replica according to a determined group configuration. In FIG. 6, M0 to M7 represents the modules 31a1 to 31a8. In the subsequent drawings, the modules 31a1 to 31a8 are expressed as M0 to M7.

In the example in FIG. 6, first, two of the modules 31a1 to 31a8 are combined. For example, the number of groups of the modules 31a1 to 31a8 is four. In this case, in four of the replicas R0 to R15, the partial parallel trials with a parallel trial bit number P = K * 2 are performed in parallel per step period.

The data processing device 20 starts processing of the replica, at a timing shifted by four step periods or equal to or more than four step periods in each stage, so that the processing of the same replica is executed in the next group after h update of the replica that is processed in one group. As a result, since ΔE calculation is performed in each replica by using the local field reflecting the previous bit update, the principle of sequential processing of the MCMC method is observed.

In the example in FIG. 6, at a timing shifted by four step periods, a replica processed in one group is processed in a next group.

Next, in the example in FIG. 6, a configuration changes to a configuration in which four of the modules 31a1 to 31a8 are combined, at a certain timing. For example, the number of groups of the modules 31a1 to 31a8 changes from four to two. In this case, in two of the replicas R0 to R15, the partial parallel trials with a parallel trial bit number P = K * 4 are performed in parallel per step period. Furthermore, since the number of replicas processed in parallel is two, the data processing device 20 changes a step period, for example, after h update of a replica processed in one group is completed and before the same replica is processed in the next group. In the example in FIG. 6, when the number of groups is four, the step period described above is four step periods. However, when the number of groups is two, the step period described above is changed to eight step periods.

FIG. 7 is a diagram illustrating a second example of the processing of the replica according to the determined group configuration.

In the example in FIG. 7, the modules 31a1 to 31a8 (MO to M7) are divided into four groups to which one, one, two, and four modules respectively belong. In the example in FIG. 7, a partial parallel trial of each replica is performed with one of four parallel trial bit numbers P. Since the replicas R0 to R7 are processed using one module, the parallel trial bit number P is K. Since the replicas R8 to R11 are processed using two modules, the parallel trial bit number P is K * 2. Since the replicas R12 to R15 are processed using four modules, the parallel trial bit number P is K * 4.

Due to such a difference in the parallel trial bit number P, a period in which trials are performed for all the N bits varies for each replica. By performing one trial for all the bits in the replicas (replicas R0 to R7 in this example) processed using the minimum number of modules, one trial for all the N bits is performed in all the replicas.

In the example in FIG. 7, the replicas R0 to R7 are processed using one module in one-step period. In a case where all the N bits are divided and processed by eight modules in the replicas R0 to R7, a step period in which one trial for all the bits is performed is 4 (the number of stages of pipeline) * 8 (the number of modules) = 32 step periods.

In this case, the overall control unit 30 controls the module to which the processing of each replica is allocated and the group configuration of each module as illustrated in FIG. 7, so that each replica completes at least one trial for all the N bits in 32 step periods.

FIG. 8 is a diagram illustrating an example of pipeline processing.

In the example in FIG. 8, the data processing device 20 starts processing of the replica at a timing shifted by four step periods in each stage, so that, after h update of a replica processed in one group, the same replica is processed in a next group. For example, processing of the replica R0 is started at a timing shifted by four step periods in each stage, so that, after h update of the replica R0 in a group of the module 31a8 (M7), the processing of the replica R0 is executed in the group of the module 31a4 (M3).

As a result, since ΔE calculation is performed in each replica by using the local field reflecting the previous bit update, the principle of sequential processing of the MCMC method is observed.

Here, the update of the local field needs to be reflected in all bits of the replica. Therefore, reading of the weighting coefficients is performed simultaneously for all the bits of the four replicas. As illustrated in FIG. 5, the data processing device 20 divides a memory holding the weighting coefficient corresponding to each group, for example, into the memories 40p1 to 40p8. Therefore, accesses corresponding to the plurality of replicas are not concentrated on the same memory. For example, in a step period with a star in FIG. 8, a weighting coefficient is read as follows.

FIG. 9 is a diagram illustrating an example of reading a weighting coefficient.

Each of the memory units 40a to 47a of the modules 31a1 to 31a8 (MO to M7) are divided into eight memories. Each of the eight memories holds K bits allocated to an own module and a weighting coefficient between the K bits allocated to any one of the modules 31a1 to 31a8.

For example, in the memory unit 40a of the module 31a1, W0 (M0), W0 (M1), W0 (M2), W0 (M3), W0 (M4), W0 (M5), W0 (M6), and W0 (M7) are divided into eight memories (memories 40p1 to 40p8 in FIG. 5) and are held. For example, W0 (M0) is a weighting coefficient between the K bits allocated to the module 31a1. W0 (M7) is a weighting coefficient between the K bits allocated to the module 31a1 and the K bits assigned to the module 31a8.

For example, in the memory unit 47a of the module 31a8, W7 (M0), W7 (M1), W7 (M2), W7 (M3), W7 (M4), W7 (M5), W7 (M6), and W7 (M7) are divided into eight memories and are held. For example, W7 (M0) is a weighting coefficient between the K bits allocated to the module 31a8 and the K bits allocated to the module 31a1. W7 (M7) is a weighting coefficient between the K bits allocated to the module 31a8.

In a case of the group configuration as illustrated in FIG. 4 (groups A to D are expressed as GA to GD in FIG. 9), W0 (M0) to W7 (M0) are weighting coefficients used for h update of each module at the time when a bit allocated to the group A is inverted. Furthermore, W0 (M1) to W7 (M1) are weighting coefficients used for h update of each module at the time when a bit allocated to the group B is inverted. Moreover, W0 (M2) to W7 (M2) and W0 (M3) to W7 (M3) are weighting coefficients used for h update of each module at the time when a bit allocated to the group C is inverted. Furthermore, W0 (M4) to W7 (M4), W0 (M5) to W7 (M5), W0 (M6) to W7 (M6), and W0 (M7) to W7 (M7) are weighting coefficients used for h update of each module at the time when a bit allocated to the group D is inverted.

In a step period with a star in FIG. 8, at the time when a bit of the replica R4 processed by the module 31a1 (M0) belonging to the group A is inverted, a weighting coefficient is read from each of the memories holding W0 (M0) to W7 (M0).

Furthermore, at the time when a bit of the replica R0 processed by the module 31a2 (M1) belonging to the group B is inverted, a weighting coefficient is read from each of the memories holding W0 (M1) to W7 (M1).

Moreover, at the time when a bit of the replica R8 processed by the modules 31a3 (M2) and 31a4 (M3) belonging to the group C is inverted, a weighting coefficient is read from each of the memories holding W0 (M2) to W7 (M2) or W0 (M3) to W7 (M3). In a case where the inverted bit is the bit allocated to the module 31a4, as illustrated in FIG. 9, a weighting coefficient is read from each of the memories holding W0 (M3) to W7 (M3).

Furthermore, at the time when a bit of the replica R12 processed by the modules 31a5 (M4) to 31a8 (M7) belonging to the group D is inverted, a weighting coefficient is read from each memory holding a weighting coefficient regarding any one of the modules 31a5 (M4) to 31a8 (M7). For example, a weighting coefficient is read from each memory holding any one of W0 (M4) to W7 (M4), W0 (M5) to W7 (M5), W0 (M6) to W7 (M6), or W0 (M7) to W7 (M7). In a case where the inverted bit is the bit allocated to the module 31a7, as illustrated in FIG. 9, a weighting coefficient is read from each of the memories holding W0 (M6) to W7 (M6).

In this way, since processing regarding four replicas is processing for bits allocated to different modules, if memories are divided in module units as in FIG. 9, memory accesses at the time of the inversion of the bits in the four replicas are not concentrated on the same memory (same reading port). As a result, it is possible to suppress an increase in a calculation time due to a memory access at the time of h update as a bottleneck.

Note that the data processing device 20 determines whether or not a value of the weighting coefficient is zero at the time of h update, does not perform reading from the memory for the weighting coefficient of which the value is zero, and may read only a weighting coefficient of which a value is not zero. As a result, the number of times of reading the weighting coefficient from the memory can be reduced. Note that, in this case, the number of cycles needed for reading can vary according to a ratio of the weighting coefficients of which the value is zero with respect to all the weighting coefficients. However, it is sufficient for the data processing device 20 to perform control so as to stall a pipeline when the number of cycles is longer than a predetermined threshold.

Next, a processing procedure of the data processing device 20 will be described. First, a processing procedure for one replica will be described.

FIG. 10 is a flowchart illustrating an example of a processing procedure of a data processing device.

(S20) The overall control unit 30 of the FPGA 28a performs initial settings. For example, the initial settings include setting of an initial value of the parallel trial bit number P, initialization of a variable for collecting the search information, or the like. In the following example, itrnum, Csum, Fsum, Dsum, Emin, and Eminupdate are used as the variables for collecting the search information.

The variable itrnum is a variable representing the number of iterations. The variable Csum is a variable representing a cumulative value of the number of flip candidate bits. The variable Fsum is a variable representing a cumulative value of the number of flip bits. The variable Emin is a variable representing a minimum energy. The variable Dsum is a variable representing a cumulative value of a movement amount (movement distance) of a state vector represented by the Hamming distance.

In the processing in step S20, initialization is performed to itrnum = 0, Csum = 0, Fsum = 0, and Eminupdate = 0. Emin is initialized, for example, to the maximum value that can be handled by the data processing device 20.

Note that, in the processing in step S20, for example, the overall control unit 30 may set the problem information (weighting coefficient, bias, or the like included in energy function) supplied to the FPGA 28a under the control of the CPU 21 to the modules 31a1 to 31aM.

(S21) The overall control unit 30 determines whether or not it is a timing to change the parallel trial bit number P. For example, it is determined that the timing to change the parallel trial bit number P comes for each predetermined period (the predetermined number of iterations). In a case of determining that it is the change timing, the overall control unit 30 proceeds to processing in step S22, and in a case of determining that it is not the change timing, the overall control unit 30 proceeds to processing in step S23.

(S22) The overall control unit 30 executes processing for determining the parallel trial bit number P. An example of the processing in step S22 will be described later.

(S23) The overall control unit 30 supplies the control information, the group configuration information, and the flip bit information to the modules 31a1 to 31aM and causes the modules 31a1 to 31aM to perform a partial parallel trial loop. Furthermore, the overall control unit 30 determines a group configuration of the modules 31a1 to 31aM to be described later, based on the determined P and supplies group configuration information indicating the determined group configuration to the selector 33.

(S24) A partial parallel trial with the parallel trial bit number P is performed by a combination of one or the plurality of modules 31a1 to 31aM. In the processing in step S24, DE calculation and Flip determination are performed in parallel for P bits of the replica.

(S25) The selector 33 selects a flip bit. In the processing in step S25, the selector 33 selects a flip bit by selecting one of indices of the flip candidate bits obtained as a result of the Flip determination. An index of the selected flip bit (flip bit index) is supplied to the overall control unit 30.

(S26) The overall control unit 30 updates a bit corresponding to the flip bit index supplied to the selector 33, of state vectors of the respective replicas held in the storage unit. Furthermore, the overall control unit 30 supplies the flip bit information to the modules 31a1 to 31aM. The modules 31a1 to 31aM perform h update based on the flip bit information.

(S27) The search information aggregation unit 32 collects and records the search information. An example of the processing in step S27 will be described later.

(S28) The modules 31a1 to 31aM repeat the processing in steps S24 to S27 while shifting a region where the partial parallel trial is performed, based on the control of the overall control unit 30, until trials of all bits (N bits) in the replica are completed. When the trials of all the bits (N bits) in the replica are completed, the overall control unit 30 proceeds to processing in step S29.

(S29) The overall control unit 30 determines whether or not to end the search. The overall control unit 30 determines to end the search in a case where a predetermined search end condition is satisfied. For example, in a case where the number of times of iterations reaches a predetermined number of times, the overall control unit 30 determines to end the search. In a case where it is determined to end the search, the FPGA 28a ends the processing. In a case where it is determined not to end the search, the processing from step S21 is repeated.

Note that, in a case where the SA method is performed, the FPGA 28a reduces the value of T according to the predetermined temperature parameter change schedule, for example, each time when a predetermined number of times of partial parallel trials are repeated. In a case of performing the replica exchange method, the FPGA 28a sets a different value of T for each of the plurality of replicas and performs replica exchange each time when the partial parallel trials are repeated a predetermined number of times. For example, the FPGA 28a selects two replicas having adjacent T values and exchanges the values of T or states at a predetermined exchange probability based on an energy difference or a T value difference between the replicas.

When the processing ends, the FPGA 28a outputs a state vector corresponding to each replica that is finally obtained to the CPU 21 as a solution. The FPGA 28a may output energy corresponding to each replica to the CPU 21 together with the state vector. The FPGA 28a may output a solution with the lowest energy among solutions obtained through search to the CPU 21 as a final solution. The CPU 21 may control the GPU 24 and cause the display 101 display a solution.

Next, an example of a procedure for collecting and recording the search information by the search information aggregation unit 32 will be described.

FIG. 11 is a flowchart illustrating an example of the procedure for collecting and recording the search information. Note that it is sufficient that the search information aggregation unit 32 collect only search information used for processing for determining the parallel trial bit number P. However, in FIG. 11, an example is illustrated in which a plurality of types of search information is collected.

(S40) The search information aggregation unit 32 counts up (+ 1) itrnum.

(S41) The search information aggregation unit 32 acquires the search information. In this example, the search information aggregation unit 32 acquires the number of flip candidate bits C, presence or absence of a flip F (F = 1 in a case of including flip, F = 0 in a case of no flip), a current state vector Statecur, and current energy Ecur as the search information. The number of flip candidate bits C can be acquired from the modules 31a1 to 31aM, and the presence or absence of the flip F can be acquired depending on whether or not the selector 33 outputs a flip index. In a case where the current state vector Statecur and the current energy Ecur are stored in the memory 28b, the search information aggregation unit 32 acquires Statecur and Ecur from the memory 28b.

(S42) The search information aggregation unit 32 determines whether or not Ecur < Emin. In a case of determining that Ecur < Emin, the search information aggregation unit 32 executes processing in step S43, and in a case of determining that Ecur < Emin is not satisfied, the search information aggregation unit 32 executes processing in step S44.

(S43) The search information aggregation unit 32 updates Emin with Ecur and counts up (+ 1) Eminupdate.

(S44) The search information aggregation unit 32 determines whether or not it is a movement amount acquisition timing. For example, in a case where itrnum is increased a predetermined number of times from a previous movement amount acquisition timing, the search information aggregation unit 32 determines that it is the movement amount acquisition timing. In a case of determining that it is the movement amount acquisition timing, the search information aggregation unit 32 executes processing in step S45, and in a case of determining that it is not the movement amount acquisition timing, the search information aggregation unit 32 executes processing in step S47.

(S45) The search information aggregation unit 32 calculates a movement amount (Hamming distance) D between a reference state vector and the current state vector Statecur.

(S46) The search information aggregation unit 32 updates the reference state vector. The reference state vector is updated to Statecur, for example.

(S47) The search information aggregation unit 32 collects the search information. For example, the search information aggregation unit 32 adds C to Csum, adds F to Fsum, and adds D to Dsum so as to update Csum, Fsum, and Dsum.

As a result, the search information aggregation unit 32 ends one-time processing for collecting and recording the search information.

The collection and recording of the search information described above may be performed for each replica or may be collectively performed for all the replicas.

Next, an example of a procedure of processing for determining the parallel trial bit number P by the overall control unit 30 will be described.

FIG. 12 is a flowchart illustrating a first example of the procedure of the processing for determining the parallel trial bit number P.

(S50) The overall control unit 30 calculates an average value Cave of the number of flip candidate bits. The overall control unit 30 calculates Cave by dividing Csum supplied from the search information aggregation unit 32 by itrnum (the number of iterations).

(S51) The overall control unit 30 determines whether or not Cave > Cthu and P > Pthl. Cthu is a first threshold of Cave. Pthl is a lower limit value (for example, K (the number of bits handled by one module) of the parallel trial bit number P. In a case of determining that Cave > Cthu and P > Pthl, the overall control unit 30 executes processing in step S53, and in a case of determining that Cave > Cthu is not satisfied or P > Pthl is not satisfied, the overall control unit 30 executes processing in step S52.

(S52) The overall control unit 30 determines whether or not Cave < Cthl and P < Pthu. Cthl is a second threshold of Cave, and Cthl < Cthu. Pthu is an upper limit value (for example, K * M (the number of modules)) of the parallel trial bit number P. In a case of determining that Cave < Cthl and P < Pthu, the overall control unit 30 executes processing in step S54, and in a case of determining that Cave < Cthl is not satisfied or P < Pthu is not satisfied, the overall control unit 30 executes processing in step S55.

(S53) The overall control unit 30 sets P = P - Pdec so as to reduce the parallel trial bit number P. Pdec is an integer multiple value of K and is predetermined.

In a case where Cave is too large, unnecessary calculation increases, and an arithmetic operation amount increases. Therefore, the overall control unit 30 reduces the parallel trial bit number P in order to suppress the arithmetic operation amount.

(S54) The overall control unit 30 sets P = P + Pinc in order to increase the parallel trial bit number P. Pinc is an integer multiple value of K and is predetermined. Pinc may be the same value as Pdec.

In a case where Cave is too small, it is difficult to select an appropriate flip candidate bit in order to minimize energy, and there is a possibility that a solving performance deteriorates. Therefore, in order to promote an appropriate state transition and improve the solving performance, the parallel trial bit number P is increased as described above.

(S55) The overall control unit 30 sets the determined parallel trial bit number P to the modules 31a1 to 31aM.

(S56) The overall control unit 30 initializes the variable for collecting the search information and ends the processing for determining the parallel trial bit number P. In the processing in step S56, initialization is performed to itrnum = 0, Csum = 0, Fsum = 0, Dsum = 0, and Eminupdate = 0.

FIG. 13 is a flowchart illustrating a second example of the procedure of the processing for determining the parallel trial bit number P.

(S60) The overall control unit 30 calculates a flip rate Frate indicating a flip bit occurrence rate in a predetermined period. The overall control unit 30 calculates Frate by dividing Fsum supplied from the search information aggregation unit 32 by itrnum (the number of iterations).

(S61) The overall control unit 30 determines whether or not Frate > Fthu and P > Pthl. Fthu is a first threshold of Frate. In a case of determining that Frate > Fthu and P > Pthl, the overall control unit 30 executes processing in step S63, and in a case of determining that Frate > Fthu is not satisfied or P > Pthl is not satisfied, the overall control unit 30 executes processing in step S62.

(S62) The overall control unit 30 determines whether or not Frate < Fthl and P < Pthu. Fthl is a second threshold of Frate, and Fthl < Fthu. In a case of determining that Frate < Fthl and P < Pthu, the overall control unit 30 executes processing in step S64, and in a case of determining that Frate < Fthl is not satisfied or P < Pthu is not satisfied, the overall control unit 30 executes processing in step S65.

(S63) The overall control unit 30 sets P = P - Pdec so as to reduce the parallel trial bit number P. In a case where Frate is too large, too many state transitions occur, and convergence of calculation deteriorates. Therefore, there is a possibility that the solving performance deteriorates. Therefore, the overall control unit 30 reduces the parallel trial bit number P so as to reduce the magnitude of Frate.

(S64) The overall control unit 30 sets P = P + Pinc so as to increase the parallel trial bit number P. In a case where Frate is too small, few state transitions occur. Therefore, there is a possibility that the solving performance deteriorates. Therefore, in order to promote a state transition and improve the solving performance, the parallel trial bit number P is increased as described above.

Since processing in steps S65 and S66 is the same as the processing in steps S55 and S56 illustrated in FIG. 12, description thereof is omitted.

FIG. 14 is a flowchart illustrating a third example of the procedure of the processing for determining the parallel trial bit number P.

(S70) The overall control unit 30 calculates an average value Dave of the movement amount D. The overall control unit 30 calculates Dave by dividing Dsum supplied from the search information aggregation unit 32 by itrnum (the number of iterations).

(S71) The overall control unit 30 determines whether or not Dave > Dthu, Emin is not updated, and P > Pthl. Dthu is a first threshold of Dave. In a case of determining that Dave > Dthu, Emin is not updated, and P > Pthl, the overall control unit 30 executes processing in step S73. In a case of determining that Dave > Dthu is not satisfied, or Emin is updated, or P > Pthl is not satisfied, the overall control unit 30 executes processing in step S72.

Note that whether or not Emin is updated can be determined according to whether or not Eminupdate is a value equal to or more than one.

(S72) The overall control unit 30 determines whether or not Dave < Dthl, Emin is not updated, and P < Pthu. Dthl is a second threshold of Frate, and Dthl < Dthu. In a case of determining that Dave < Dthl, Emin is not updated, and P < Pthu, the overall control unit 30 executes processing in step S74. In a case of determining that Dave < Dthl is not satisfied, or Emin is updated, or P < Pthu is not satisfied, the overall control unit 30 executes processing in step S75.

(S73) The overall control unit 30 sets P = P - Pdec so as to reduce the parallel trial bit number P. In a case where Emin is not updated even though Dave is large, many unnecessary calculations occur, and there is a possibility that the solving performance deteriorates. Therefore, the overall control unit 30 reduces the parallel trial bit number P in order to prevent the occurrence of the unnecessary calculations.

(S74) The overall control unit 30 sets P = P + Pinc so as to increase the parallel trial bit number P. In a case where Dave is too small and Emin is not updated, since a search range is too narrow, there is a possibility that the solving performance deteriorates. Therefore, in order to widen the search range and improve the solving performance, the parallel trial bit number P is increased as described above.

Since processing in steps S75 and S76 is the same as the processing in steps S55 and S56 illustrated in FIG. 12, description thereof is omitted.

The processing for determining the parallel trial bit number P as described above may be executed based on the collection of the search information regarding each replica or may be executed based on the collection of the search information regarding all the replicas.

Furthermore, the three types of determination processing as described above can be combined with each other. For example, the parallel trial bit number P determined through the three types of determination processing is set to the modules 31a1 to 31aM.

Note that the overall control unit 30 may perform adjustment so as to make P in each replica be the same value (refer to FIG. 6) or to make P in each replica be a certain ratio (refer to FIG. 7), based on the determined value of the parallel trial bit number P. As a result, an efficiency of the pipeline processing is improved.

Next, the processing procedure by the data processing device 20 will be more specifically described using a case where parallel processing by four groups is executed as an example.

FIG. 15 is a flowchart illustrating an example of a procedure of the parallel processing by the four groups. FIG. 15 includes more specific examples, for a plurality of replicas, of the processing in steps S23 to S28 in the procedure illustrated in FIG. 10. Illustration of the processing for determining the parallel trial bit number P, processing for collecting and recording the search information, or the like is omitted.

(S80) The overall control unit 30 performs initial settings. For example, the initial settings include setting of an initial value of the parallel trial bit number P and initialization of the variable for collecting the search information described above. Moreover, in a case where the plurality of replicas is used, the number of replicas, the number of groups (four in example in FIG. 15), and a replica interval between groups are set. The number of stages of the pipeline or a value equal to or more than the number of stages is set to the replica interval (four in example in FIG. 8 described above).

Moreover, in the processing in step S80, first, a group to which each of the modules 31a1 to 31aM is allocated and a replica processed by each group are set. For example, in the example illustrated in FIG. 7 described above, the modules 31a1 to 31a4 (MO to M3) are allocated to one group, and the replica R12 is allocated to the group. Furthermore, the modules 31a5 and 31a6 (M4 and M5) are allocated to one group, and the replica R8 is allocated to the group. Moreover, the module 31a7 (M6) is allocated to one group, and the replica R4 is allocated to the group. The module 31a8 (M7) is allocated to one group, and the replica R0 is allocated to the group.

The overall control unit 30 may allocate a replica with a higher temperature (value of T that is parameter representing set temperature is larger) to a group including a smaller number of modules, so that the replica has a smaller initial value of the parallel trial bit number P.

Hereinafter, the four groups are expressed as GO to G3.

(S81) The modules 31a1 to 31aM execute loop processing until one trial is performed for all bits in each replica.

(S82) The overall control unit 30 sets allocation of modules or groups to a replica, for each round of a replica loop.

In the example illustrated in FIG. 7 described above, one-step period corresponds to one round of a replica loop.

For each round of the replica loop, a replica allocated to each module changes. Then, for each four rounds of the replica loop, a module to which the same replica is allocated changes. For example, in a first round, the replica R12 is allocated to the modules 31a1 to 31a4 (MO to M3), and the replica R8 is allocated to the modules 31a5 and 31a6 (M4 and M5). Furthermore, in the first round, the replica R4 is allocated to the module 31a7 (M6), and the replica R0 is allocated to the module 31a8 (M7). Four rounds later, the replica R12 is allocated to the modules 31a5 to 31a8 (M4 to M7), and the replica R8 is allocated to the modules 31a1 and 31a2 (MO and M1). Furthermore, four rounds later, the replica R4 is allocated to the module 31a3 (M2), and the replica R0 is allocated to the module 31a4 (M3).

(S83a, S83b, S83c, S83d) DE calculation for replicas allocated to the respective groups GO to G3 are executed in parallel by the groups GO to G3. In a case of the number of modules M = 8, DE calculation is performed by the ΔE calculation units 41c1 to 47cK illustrated in FIG. 4.

(S84a, S84b, S84c, S84d) Flip determination for replicas allocated to the respective groups GO to G3 is executed in parallel by the groups GO to G3. In a case of the number of modules M = 8, Flip determination is performed by the selectors 40d to 47d illustrated in FIG. 4.

(S85a, S85b, S85c, S85d) The groups GO to G3 determine whether or not a flip occurs in the replica processed by each group in parallel. The module control units 31b1 to 31bM of the modules 31a1 to 31aM perform the determination described above, based on the flip bit information supplied from the overall control unit 30.

In a case where it is determined that the flip occurs in the processing in step S85a, processing in step S86a is executed. In a case where it is determined that the flip occurs in the processing in step S85b, processing in step S86b is executed. In a case where it is determined that the flip occurs in the processing in step S85c, processing in step S86c is executed. In a case where it is determined that the flip occurs in the processing in step S85d, processing in step S86d is executed. In a case where it is determined that the flip does not occur in the processing in steps S85a to S85d, processing in step S88 is executed.

(S86a, S86b, S86c, S86d) In the groups GO to G3, each of the modules 31a1 to 31aM reads all weighting coefficients regarding the flip bit from the memory. In a case where the flip bits occur in all of the groups GO to G3, the weighting coefficients for the flip bits of all the groups are read by the respective modules 31a1 to 31aM (refer to FIG. 9).

(S87a, S87b, S87c, S87d) Each of the groups GO to G3 performs h update with the function illustrated in FIG. 5, using the read weighting coefficients. In a case where the flip bits occur in all of the groups GO to G3, local fields corresponding to the bits for all the groups are updated for each of the replicas being processed by the groups GO to G3.

(S88) Until one trial for the entire bit is performed in each replica, the processing in steps S82, S83a to S87a, S83b to S87b, S83c to S87c, and S83d to S87d is repeated. When one trial for the entire bit is performed in each replica, processing in step S89 is executed as going through the loop processing.

(S89) The overall control unit 30 determines whether or not to end the search. The overall control unit 30 determines to end the search in a case where a predetermined search end condition is satisfied. For example, in a case where the number of times of iterations reaches a predetermined number of times, the overall control unit 30 determines to end the search. In a case where it is determined to end the search, the FPGA 28a ends the processing. In a case where it is determined not to end the search, the processing from step S81 is repeated.

Note that an order of the processing illustrated in FIGs. 10 to 15 is an example, and the order of the processing may be appropriately changed. For example, before the processing in steps S42 and S43, the processing in steps S44 and S45 may be executed.

According to the data processing device 20 according to the second embodiment as described above, the parallel trial bit number P of the partial parallel trial is changed based on the search information indicating the search status. As a result, it is possible to set the parallel trial bit number P according to the search status that reflects characteristics of a problem, and the arithmetic operation amount used to change one bit is optimized, and a solving performance for a large-scale problem can be improved.

Furthermore, in addition to the optimization of the arithmetic operation amount, by changing the parallel trial bit number P as described above, in a case where a certain bit is inverted, a period before the bit becomes an update candidate next can be adjusted. As a result, by inverting the bit, it is possible to avoid a situation where the bit is inverted again and the state is constrained by a local solution again when the state escapes from the local solution.

Moreover, in the data processing device 20 according to the second embodiment, n groups each including one or a plurality of modules perform parallel partial trials in parallel, for n replicas of the plurality of replicas for each unit processing period (one-step period). Between the groups performing the respective partial parallel trials, control is performed so that, until one group completes update processing (h update or update of state vector) regarding the parallel trial bit number P for a certain replica, other groups do not start processing of the partial parallel trial for the replica. The data processing device 20 shifts a processing timing of the pipeline so that other groups process other replicas until the update processing for the replica is completed. As a result, even in a case where the parallel trial bit number P is variable, it is possible to effectively utilize arithmetic operation resources while observing the principle of the sequential processing of the MCMC method, and it is possible to improve the solving performance for a relatively large problem.

Note that, in the second embodiment, as an example, the number of groups is four. However, the number of groups may be a plural number other than four. Furthermore, the number of replicas may be a number other than 16. Furthermore, the number of bits handled by each module is set to K. However, K may be a different value for each module.

Furthermore, the processing for each replica by the data processing device 20 may be executed by the FPGA 28a as in the example described above or may be executed by another arithmetic unit such as the CPU 21 or the GPU 24. The arithmetic unit such as the FPGA 28a or the CPU 21 is an example of the processing unit in the data processing device 20. Furthermore, the storage unit that holds the plurality of replicas may be implemented by the memory 28b or the register as described above, or may be implemented by the RAM 22. Moreover, it can be said that the accelerator card 28 is an example of the "data processing device".

Note that the information processing according to the first embodiment may be implemented by causing the processing unit 12 to execute a program. Furthermore, the information processing according to the second embodiment may be implemented by causing the CPU 21 to execute the program. The program may be recorded in the computer-readable recording medium 103.

For example, the program may be distributed by distributing the recording medium 103 in which the program is recorded. Alternatively, the program may be stored in another computer and distributed via a network. For example, a computer may store (install) the program, which is recorded in the recording medium 103 or received from another computer, in a storage device such as the RAM 22 or the HDD 23, read the program from the storage device, and execute the program.

While one aspect of the program, the data processing device, and the data processing method according to the embodiment has been described on the basis of the embodiments, these are merely examples, and are not limited to the descriptions above.

## Claims

**1.** A data processing program comprising instructions which, when executed by a computer comprising a plurality of processing units (31a1 to 31aM) capable of parallel execution of searching for a solution for a combinatorial optimization problem represented by an energy function that includes a plurality of state variables, cause the computer to execute processing comprising:

executing search processing (S23-S28) of searching for the solution by performing determination whether or not to accept a change of each value of a plurality of first state variables, for the plurality of first state variables selected from among the plurality of state variables, in parallel and executing processing of changing the value of one state variable of which the change of the value is determined to be accepted while changing the plurality of selected first state variables;

adjusting (S22) the number of the plurality of selected first state variables, based on a search status of the search processing or search information that indicates a search record of another combinatorial optimization problem, to optimize arithmetic operation amount for the search processing performed in parallel by the plurality of processing units of the computer; and

repeating (S23-S28) the search processing in accordance with the adjusted number of the plurality of selected first state variables.

**2.** The data processing program according to claim 1, wherein the search information includes a first cumulative value in a first period, on the number of second state variables of which the change of the value is determined to be accepted, among the plurality of first state variables.

**3.** The data processing program according to claim 2, wherein the adjusting of the number of the plurality of selected first state variables includes:

calculating a first average value in the first period, of the number of the second state variables, based on the first cumulative value;

reducing the number of the plurality of first state variables in a case where the first average value is larger than a first threshold; and

increasing the number of the plurality of first state variables in a case where the first average value is smaller than a second threshold that is smaller than the first threshold.

**4.** The data processing program according to any one of claims 1 to 3, wherein the search information includes a second cumulative value in a second period, of the number of third state variables of which the value changes, among the plurality of first state variables.

5. The data processing program according to claim 4, wherein the adjusting of the number of the plurality of selected first state variables includes:

calculating an occurrence rate of the third state variable, in the second period, based on the second cumulative value;
reducing the number of the plurality of first state variables, in a case where the occurrence rate is larger than a third threshold; and
increasing the number of the plurality of first state variables in a case where the occurrence rate is smaller than a fourth threshold that is smaller than the third threshold.

6. The data processing program according to any one of claims 1 to 5, wherein the search information includes a movement amount represented by a Hamming distance, in a third period, of a state vector according to the plurality of state variables.

7. The data processing program according to claim 6, wherein the adjusting of the number of the plurality of selected first state variables includes:

calculating a second average value of the movement amount, in the third period, based on the movement amount;
reducing the number of the plurality of first state variables in a case where the second average value is larger than a fifth threshold and a minimum value of the energy function is not updated in the search processing in the third period; and
increasing the number of the plurality of first state variables in a case where the second average value is smaller than a sixth threshold that is smaller than the fifth threshold and the minimum value is not updated.

8. A data processing device of searching for a solution for a combinatorial optimization problem represented by an energy function that includes a plurality of state variables, the data processing device comprising:

a plurality of processing units (31a1 to 31aM) capable of parallel execution and configured to
determine whether or not to accept a change of each value of a plurality of first state variables, in parallel for the plurality of first state variables selected from among the plurality of state variables, execute search processing of searching for the solution by executing processing of changing the value of the one state variable of which the change of the value is determined to be accepted while changing the plurality of selected first state variables, adjust the number of the plurality of selected first state variables based on a search status of the search processing or search information that indicates a search record of another combinatorial optimization problem, to optimize arithmetic operation amount for the search processing performed in parallel by the plurality of processing units of the computer, and
repeat the search processing in accordance with the adjusted number of the plurality of selected first state variables; and
a storage unit configured to store the search information.

9. The data processing device according to claim 8, wherein

the processing unit includes M (M is integer equal to or more than two) modules that are grouped and a selector in n (n is integer equal to or more than two) groups each of which includes one or a plurality of modules,
the n groups make the determination regarding the plurality of first state variables, in parallel, for each n replicas of a plurality of replicas that respectively indicates the plurality of state variables, for each unit processing period,
the selector selects one state variable of which the change of the value is determined to be accepted according to the determination for each of the n groups in parallel, and
the processing unit performs control so that a group other than a first group of the n groups does not start to process a first replica, until update processing of changing the value of the state variable selected by the selector, of the first replica that is one of the plurality of replicas, ends in the first group of the n groups.

10. A data processing method of searching for a solution for a combinatorial optimization problem represented by an energy function that includes a plurality of state variables, the data processing method comprising:

executing, by a processor circuit of a computer comprising a plurality of processing units (31a1 to 31aM) capable of parallel execution, search processing of searching for the solution by performing determination whether or not to accept a change of each value of a plurality of first state variables, for the plurality of first state variables selected from among the plurality of state variables, in parallel and executing processing of changing the value of one state variable of which the change of the value is determined to be accepted while changing the plurality of selected first state variables;

adjusting, by the processor circuit of the computer, the number of the plurality of selected first state variables, based on a search status of the search processing or search information that indicates a search record of another combinatorial optimization problem to optimize arithmetic operation amount for the search processing performed in parallel by the plurality of processing units of the computer; and

repeating the search processing in accordance with the adjusted number of the plurality of selected first state variables.

## Patentansprüche

1. Datenverarbeitungsprogramm, umfassend Anweisungen, die, wenn sie von einem Computer ausgeführt werden, der eine Vielzahl von Verarbeitungseinheiten (31a1 bis 31aM) umfasst, die zur parallelen Ausführung eines Suchens nach einer Lösung für ein kombinatorisches Optimierungsproblem in der Lage sind, das durch eine Energiefunktion repräsentiert wird, die eine Vielzahl von Zustandsvariablen einschließt, den Computer veranlassen, eine Verarbeitung auszuführen, die Folgendes umfasst:

   Ausführen einer Suchverarbeitung (S23-S28) des Suchens nach der Lösung durch Ausführen einer Bestimmung, ob eine Änderung jedes Wertes einer Vielzahl von ersten Zustandsvariablen akzeptiert werden soll oder nicht, für die Vielzahl von ersten Zustandsvariablen, die aus der Vielzahl von Zustandsvariablen ausgewählt sind, parallel und Ausführen einer Verarbeitung des Änderns des Wertes einer Zustandsvariablen, deren Änderung des Wertes als zu akzeptieren bestimmt ist, während die Vielzahl von ausgewählten ersten Zustandsvariablen geändert wird;

   Anpassen (S22) der Anzahl der Vielzahl von ausgewählten ersten Zustandsvariablen, basierend auf einem Suchstatus der Suchverarbeitung oder Suchinformationen, die einen Suchdatensatz eines anderen kombinatorischen Optimierungsproblems angeben, um den arithmetischen Operationsbetrag für die parallel von der Vielzahl von Verarbeitungseinheiten des Computers durchgeführte Suchverarbeitung zu optimieren; und

   Wiederholen (S23-S28) des Suchprozesses in Übereinstimmung mit der angepassten Anzahl der Vielzahl von ausgewählten ersten Zustandsvariablen.

2. Datenverarbeitungsprogramm nach Anspruch 1, wobei die Suchinformationen einen ersten kumulativen Wert in einer ersten Periode über die Anzahl der zweiten Zustandsvariablen, deren Änderung des Wertes als zu akzeptieren bestimmt wird, unter der Vielzahl von ersten Zustandsvariablen einschließen.

3. Datenverarbeitungsprogramm nach Anspruch 2, wobei das Anpassen der Anzahl der Vielzahl von ausgewählten ersten Zustandsvariablen Folgendes einschließt:

   Berechnen eines ersten Durchschnittswertes in der ersten Periode der Anzahl der zweiten Zustandsvariablen, basierend auf dem ersten kumulativen Wert;

   Reduzieren der Anzahl der Vielzahl von ersten Zustandsvariablen in einem Fall, in dem der erste Durchschnittswert größer als ein erster Schwellenwert ist; und

   Erhöhen der Anzahl der Vielzahl von ersten Zustandsvariablen in einem Fall, in dem der erste Durchschnittswert kleiner als ein zweiter Schwellenwert ist, der kleiner als der erste Schwellenwert ist.

4. Datenverarbeitungsprogramm nach einem der Ansprüche 1 bis 3, wobei die Suchinformationen einen zweiten kumulativen Wert in einer zweiten Periode der Anzahl von dritten Zustandsvariablen, deren Wert sich ändert, unter der Vielzahl von ersten Zustandsvariablen einschließen.

5. Datenverarbeitungsprogramm nach Anspruch 4, wobei das Anpassen der Anzahl der Vielzahl von ausgewählten ersten Zustandsvariablen Folgendes einschließt:

   Berechnen einer Auftretensrate der dritten Zustandsvariablen in der zweiten Periode, basierend auf dem zweiten kumulativen Wert;

   Reduzieren der Anzahl der Vielzahl von ersten Zustandsvariablen in einem Fall, in dem die Auftretensrate größer als ein dritter Schwellenwert ist; und

   Erhöhen der Anzahl der Vielzahl von ersten Zustandsvariablen in einem Fall, in dem die Auftretensrate kleiner als ein vierter Schwellenwert ist, der kleiner als der dritte Schwellenwert ist.

6. Datenverarbeitungsprogramm nach einem der Ansprüche 1 bis 5, wobei die Suchinformationen einen Bewegungsbetrag einschließen, der durch einen Hamming-Abstand in einer dritten Periode eines Zustandsvektors gemäß der Vielzahl von Zustandsvariablen repräsentiert wird.

7. Datenverarbeitungsprogramm nach Anspruch 6, wobei das Anpassen der Anzahl der Vielzahl von ausgewählten ersten Zustandsvariablen Folgendes einschließt:

Berechnen eines zweiten Durchschnittswertes des Bewegungsbetrags in der dritten Periode, basierend auf dem Bewegungsbetrag;
Reduzieren der Anzahl der Vielzahl von ersten Zustandsvariablen in einem Fall, in dem der zweite Durchschnittswert größer als ein fünfter Schwellenwert ist und ein minimaler Wert der Energiefunktion bei der Suchverarbeitung in der dritten Periode nicht aktualisiert wird; und
Erhöhen der Anzahl der Vielzahl von ersten Zustandsvariablen in einem Fall, in dem der zweite Durchschnittswert kleiner als ein sechster Schwellenwert ist, der kleiner als der fünfte Schwellenwert ist, und der minimale Wert nicht aktualisiert wird.

8. Datenverarbeitungsvorrichtung zum Suchen einer Lösung für ein kombinatorisches Optimierungsproblem, das durch eine Energiefunktion repräsentiert wird, die eine Vielzahl von Zustandsvariablen einschließt, wobei die Datenverarbeitungsvorrichtung Folgendes umfasst:

eine Vielzahl von Verarbeitungseinheiten (31a1 bis 31aM), die zur parallelen Ausführung in der Lage und konfiguriert sind zum
Bestimmen, ob eine Änderung jedes Wertes einer Vielzahl von ersten Zustandsvariablen akzeptiert werden soll oder nicht, parallel für die Vielzahl von ersten Zustandsvariablen, die unter der Vielzahl von Zustandsvariablen ausgewählt sind,
Ausführen eines Suchprozesses des Suchens der Lösung durch Ausführen einer Verarbeitung zum Ändern des Wertes der einen Zustandsvariablen, deren Änderung des Wertes als zu akzeptieren bestimmt ist, während die Vielzahl von ausgewählten ersten Zustandsvariablen geändert wird,
Anpassen der Anzahl der Vielzahl von ausgewählten ersten Zustandsvariablen basierend auf einem Suchstatus der Suchverarbeitung oder Suchinformationen, die einen Suchdatensatz eines anderen kombinatorischen Optimierungsproblems angeben, um den arithmetischen Operationsbetrag für die parallel von der Vielzahl von Verarbeitungseinheiten des Computers durchgeführte Suchverarbeitung zu optimieren, und
Wiederholen der Suchverarbeitung gemäß der angepassten Anzahl der Vielzahl von ausgewählten ersten Zustandsvariablen; und
eine Speichereinheit, die konfiguriert ist, um die Suchinformationen zu speichern.

9. Datenverarbeitungsvorrichtung nach Anspruch 8, wobei

die Verarbeitungseinheit M (M ist eine ganze Zahl, die gleich oder größer als zwei ist) Module, die gruppiert sind, und einen Selektor in n (n ist eine ganze Zahl, die gleich oder größer als zwei ist) Gruppen, von denen jede ein oder eine Vielzahl von Modulen einschließt, einschließt,
die n Gruppen die Bestimmung betreffend der Vielzahl von ersten Zustandsvariablen parallel für jede n Replikate einer Vielzahl von Replikaten, die jeweils die Vielzahl von Zustandsvariablen angeben, für jede Einheitsverarbeitungsperiode vornehmen,
der Selektor eine Zustandsvariable auswählt, deren Änderung des Wertes gemäß der Bestimmung für jede der n Gruppen als zu akzeptieren parallel bestimmt wird, und
die Verarbeitungseinheit eine Steuerung durchführt, so dass eine andere Gruppe als eine erste Gruppe der n Gruppen nicht startet, um ein erstes Replikat zu verarbeiten, bis die Aktualisierungsverarbeitung der Änderung des Wertes der Zustandsvariablen, die durch den Selektor ausgewählt wurde, des ersten Replikats, das eines aus der Vielzahl von Replikaten ist, in der ersten Gruppe der n Gruppen endet.

10. Datenverarbeitungsverfahren zum Suchen nach einer Lösung für ein kombinatorisches Optimierungsproblem, das durch eine Energiefunktion repräsentiert wird, die eine Vielzahl von Zustandsvariablen einschließt, wobei das Datenverarbeitungsverfahren Folgendes umfasst:

Ausführen, durch einen Prozessorschaltkreis eines Computers, der eine Vielzahl von Verarbeitungseinheiten (31a1 bis 31aM) umfasst, die zur parallelen Ausführung in der Lage sind, paralleles Suchverarbeiten eines Suchens nach der Lösung durch Durchführen der Bestimmung, ob eine Änderung jedes Wertes einer Vielzahl von ersten Zustandsvariablen akzeptiert werden soll oder nicht, für die Vielzahl von ersten Zustandsvariablen, die unter der Vielzahl von Zustandsvariablen ausgewählt wurden,
und Ausführen der Verarbeitung des Änderns des Wertes einer Zustandsvariablen, deren Änderung des Wertes als zu akzeptieren bestimmt wird, während die Vielzahl von ausgewählten ersten Zustandsvariablen geändert wird;
Anpassen, durch den Prozessorschaltkreis des Computers, der Anzahl der Vielzahl von ausgewählten ersten Zustandsvariablen, basierend auf einem Suchstatus der Suchverarbeitung oder Suchinformationen, die einen Suchdatensatz eines anderen kombinatorischen Optimierungsproblems angeben, um den arithmetischen Operationsbetrag für die Suchverarbeitung zu optimieren, die parallel durch die Vielzahl von Verarbeitungseinheiten des Computers durchgeführt wird; und
Wiederholen der Suchverarbeitung in Übereinstimmung mit der angepassten Anzahl der Vielzahl von ausgewählten ersten Zustandsvariablen.

## Revendications

**1.** Programme de traitement de données comprenant des instructions qui, lorsqu'elles sont exécutées par un ordinateur comprenant une pluralité d'unités de traitement (31a1 à 31aM) pouvant réaliser une exécution en parallèle consistant à rechercher une solution à un problème d'optimisation combinatoire représenté par une fonction d'énergie qui inclut une pluralité de variables d'état, amènent l'ordinateur à exécuter un traitement comprenant :

l'exécution d'un traitement de recherche (S23-S28) consistant à rechercher la solution en réalisant une détermination pour établir s'il faut accepter ou non une modification de chaque valeur d'une pluralité de premières variables d'état, pour la pluralité de premières variables d'état sélectionnées parmi la pluralité de variables d'état, en parallèle et l'exécution d'un traitement consistant à modifier la valeur d'une variable d'état dont la modification de la valeur est déterminée comme étant acceptée tout en modifiant la pluralité de premières variables d'état sélectionnées ;
l'ajustement (S22) du nombre de la pluralité de premières variables d'état sélectionnées, sur la base d'un état de recherche du traitement de recherche ou d'informations de recherche qui indiquent un enregistrement de recherche d'un autre problème d'optimisation combinatoire, pour optimiser une quantité d'opérations arithmétiques pour le traitement de recherche réalisé en parallèle par la pluralité d'unités de traitement de l'ordinateur ; et
la répétition (S23-S28) du traitement de recherche conformément au nombre ajusté de la pluralité de premières variables d'état sélectionnées.

**2.** Programme de traitement de données selon la revendication 1, dans lequel les informations de recherche incluent une première valeur cumulée dans une première période, sur le nombre de deuxièmes variables d'état dont la modification de la valeur est déterminée comme étant acceptée, parmi la pluralité de premières variables d'état.

**3.** Programme de traitement de données selon la revendication 2, dans lequel l'ajustement du nombre de la pluralité de premières variables d'état sélectionnées inclut :

le calcul d'une première valeur moyenne dans la première période, du nombre des deuxièmes variables d'état, sur la base de la première valeur cumulée ;
la réduction du nombre de la pluralité de premières variables d'état dans un cas où la première valeur moyenne est supérieure à un premier seuil ; et

l'augmentation du nombre de la pluralité de premières variables d'état dans le cas où la première valeur moyenne est inférieure à un deuxième seuil qui est inférieur au premier seuil.

**4.** Programme de traitement de données selon l'une quelconque des revendications 1 à 3, dans lequel les informations de recherche incluent une deuxième valeur cumulée dans une deuxième période, du nombre de troisièmes variables d'état dont la valeur est modifiée, parmi la pluralité de premières variables d'état.

**5.** Programme de traitement de données selon la revendication 4, dans lequel l'ajustement du nombre de la pluralité de premières variables d'état sélectionnées inclut :

le calcul d'un taux d'occurrence de la troisième variable d'état, dans la deuxième période, sur la base de la deuxième valeur cumulée ;
la réduction du nombre de la pluralité de premières variables d'état, dans un cas où le taux d'occurrence est supérieur à un troisième seuil ; et
l'augmentation du nombre de la pluralité de premières variables d'état dans un cas où le taux d'occurrence est inférieur à un quatrième seuil qui est inférieur au troisième seuil.

**6.** Programme de traitement de données selon l'une quelconque des revendications 1 à 5, dans lequel les informations de recherche incluent une quantité de mouvement représentée par une distance de Hamming, dans une troisième période, d'un vecteur d'état selon la pluralité de variables d'état.

**7.** Programme de traitement de données selon la revendication 6, dans lequel l'ajustement du nombre de la pluralité de premières variables d'état sélectionnées inclut :

le calcul d'une deuxième valeur moyenne de la quantité de mouvement, dans la troisième période, sur la base de la quantité de mouvement ;
la réduction du nombre de la pluralité de premières variables d'état dans un cas où la deuxième valeur moyenne est supérieure à un cinquième seuil et où une valeur minimale de la fonction d'énergie n'est pas mise à jour dans le traitement de recherche dans la troisième période ; et
l'augmentation du nombre de la pluralité de premières variables d'état dans un cas où la deuxième valeur moyenne est inférieure à un sixième seuil qui est inférieur au cinquième seuil et où la valeur minimale n'est pas mise à jour.

**8.** Dispositif de traitement de données pour rechercher une solution à un problème d'optimisation combinatoire représenté par une fonction d'énergie qui inclut une pluralité de variables d'état, le dispositif de traitement de données comprenant :

une pluralité d'unités de traitement (31a1 à 31aM) pouvant réaliser une exécution en parallèle et configurées pour déterminer s'il faut accepter ou non une modification de chaque valeur d'une pluralité de premières variables d'état, en parallèle pour la pluralité de premières variables d'état sélectionnées parmi la pluralité de variables d'état,
exécuter un traitement de recherche consistant à rechercher la solution en exécutant un traitement consistant à modifier la valeur d'une variable d'état dont la modification de la valeur est déterminée comme étant acceptée tout en modifiant la pluralité de variables d'état sélectionnées,
ajuster le nombre de la pluralité de premières variables d'état sélectionnées sur la base d'un état de recherche du traitement de recherche ou d'informations de recherche qui indiquent un enregistrement de recherche d'un autre problème d'optimisation combinatoire, pour optimiser une quantité d'opérations arithmétiques pour le traitement de recherche réalisé en parallèle par la pluralité d'unités de traitement de l'ordinateur, et
répéter le traitement de recherche conformément au nombre ajusté de la pluralité de premières variables d'état sélectionnées ; et
une unité de stockage configurée pour stocker les informations de recherche.

**9.** Dispositif de traitement de données selon la revendication 8, dans lequel

l'unité de traitement inclut M (M est un nombre entier supérieur ou égal à deux) modules qui sont regroupés et un sélecteur dans n (n est un nombre entier supérieur ou égal à deux) groupes, chacun d'eux incluant un ou une pluralité de modules,
les n groupes effectuent la détermination concernant la pluralité de premières variables d'état, en parallèle, pour chaque n répliques d'une pluralité de répliques qui indiquent respectivement la pluralité de variables d'état, pour chaque période de traitement unitaire,
le sélecteur sélectionne une variable d'état dont la modification de la valeur est déterminée comme étant acceptée selon la détermination pour chacun des n groupes en parallèle, et
l'unité de traitement réalise un contrôle de sorte qu'un groupe autre qu'un premier groupe des n groupes ne commence pas à traiter une première réplique tant que le traitement de mise à jour consistant à modifier la valeur de la variable d'état sélectionnée par le sélecteur, de la première réplique qui fait partie de la pluralité de répliques, n'est pas terminé dans le premier groupe des n groupes.

**10.** Procédé de traitement de données pour rechercher une solution à un problème d'optimisation combinatoire représenté par une fonction d'énergie qui inclut une pluralité de variables d'état, le procédé de traitement de données comprenant :

l'exécution, par un circuit processeur d'un ordinateur comprenant une pluralité d'unités de traitement (31a1 à 31aM) pouvant réaliser une exécution en parallèle, d'un traitement de recherche consistant à rechercher la solution en réalisant une détermination pour établir s'il faut accepter ou non une modification de chaque valeur d'une pluralité de premières variables d'état, pour la pluralité de premières variables d'état sélectionnées parmi la pluralité de variables d'état, en parallèle et l'exécution d'un traitement consistant à modifier la valeur d'une variable d'état dont la modification est déterminée comme étant acceptée tout en modifiant la pluralité de premières variables d'état sélectionnées ;

l'ajustement, par le circuit processeur de l'ordinateur, du nombre de la pluralité de premières variables d'état sélectionnées, sur la base d'un état de recherche du traitement de recherche ou d'informations de recherche qui indiquent un enregistrement de recherche d'un autre problème d'optimisation combinatoire pour optimiser une quantité d'opérations arithmétiques pour le traitement de recherche réalisé en parallèle par la pluralité d'unités de traitement de l'ordinateur ; et

la répétition du traitement de recherche conformément au nombre ajusté de la pluralité de premières variables d'état sélectionnées.

FIG. 1

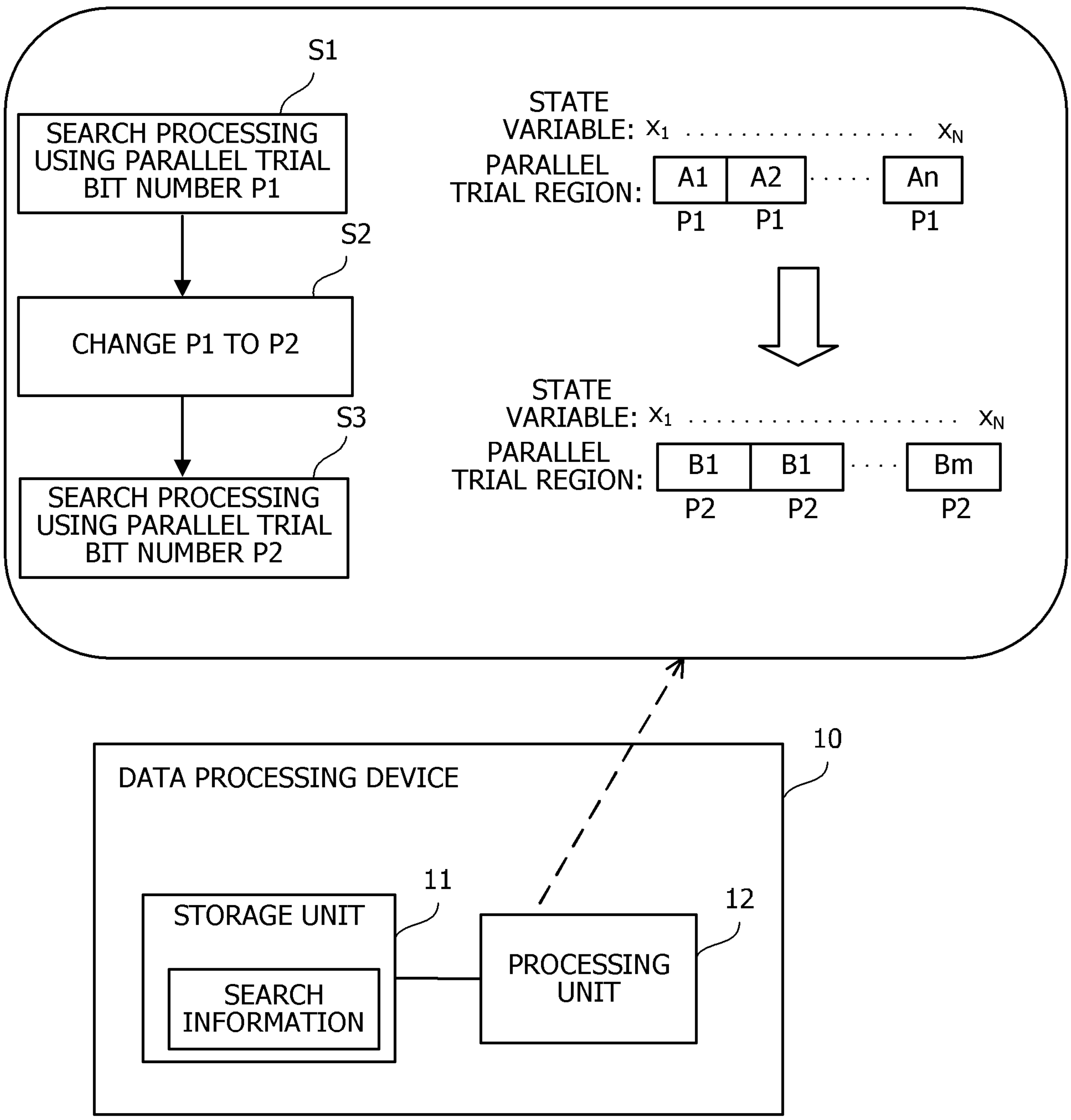
S1
SEARCH PROCESSING USING PARALLEL TRIAL BIT NUMBER P1
S2
CHANGE P1 TO P2
S3
SEARCH PROCESSING USING PARALLEL TRIAL BIT NUMBER P2
STATE VARIABLE: x1 ... xN
PARALLEL TRIAL REGION:
A1 A2 ... An
P1 P1 P1
STATE VARIABLE: x1 ... xN
PARALLEL TRIAL REGION:
B1 B1 ... Bm
P2 P2 P2
DATA PROCESSING DEVICE
10
STORAGE UNIT
11
SEARCH INFORMATION
PROCESSING UNIT
12

FIG. 2

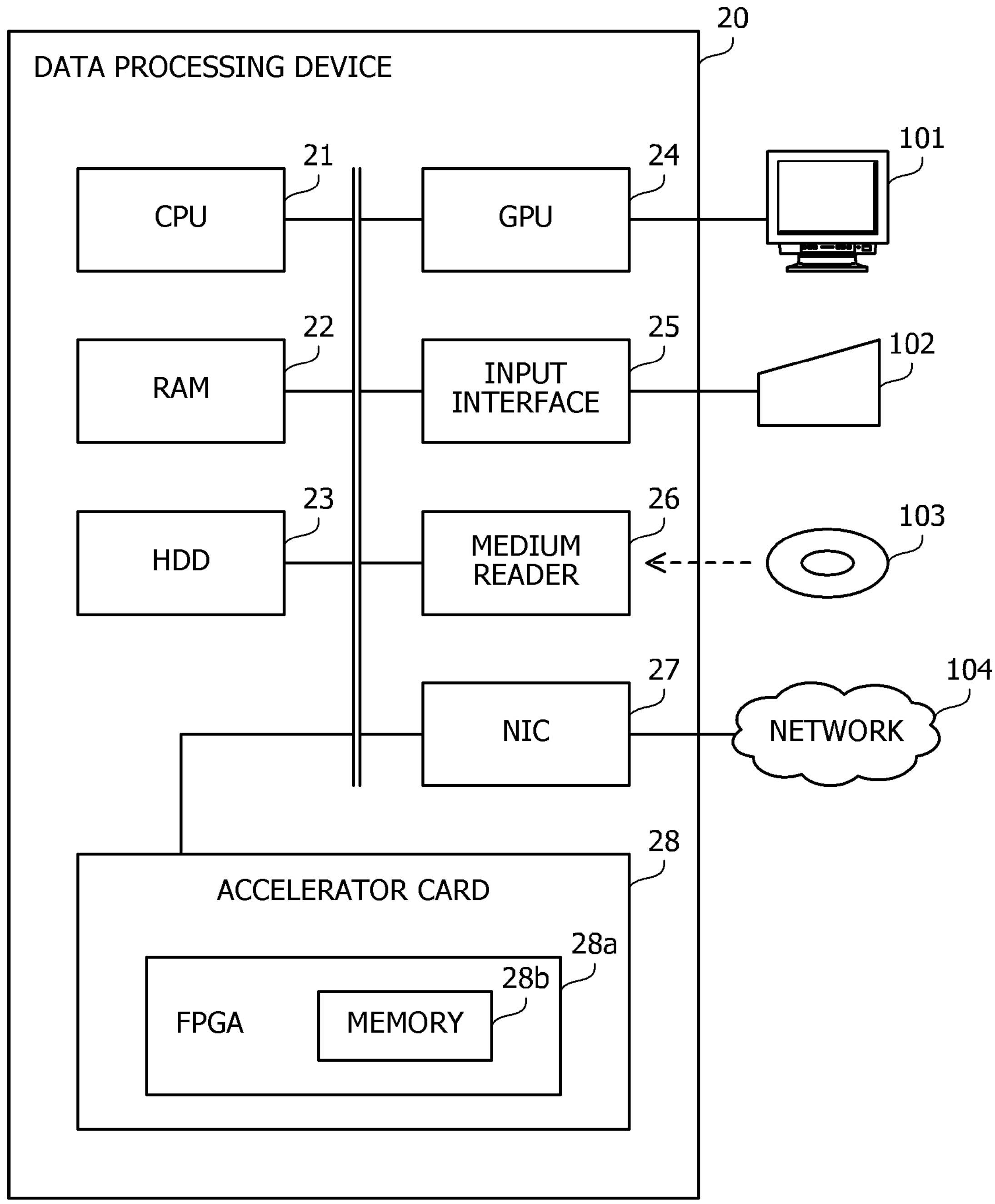
20
DATA PROCESSING DEVICE
21
CPU
24
GPU
101
22
RAM
25
INPUT INTERFACE
102
23
HDD
26
MEDIUM READER
103
27
NIC
104
NETWORK
28
ACCELERATOR CARD
28a
28b
FPGA
MEMORY

FIG. 3

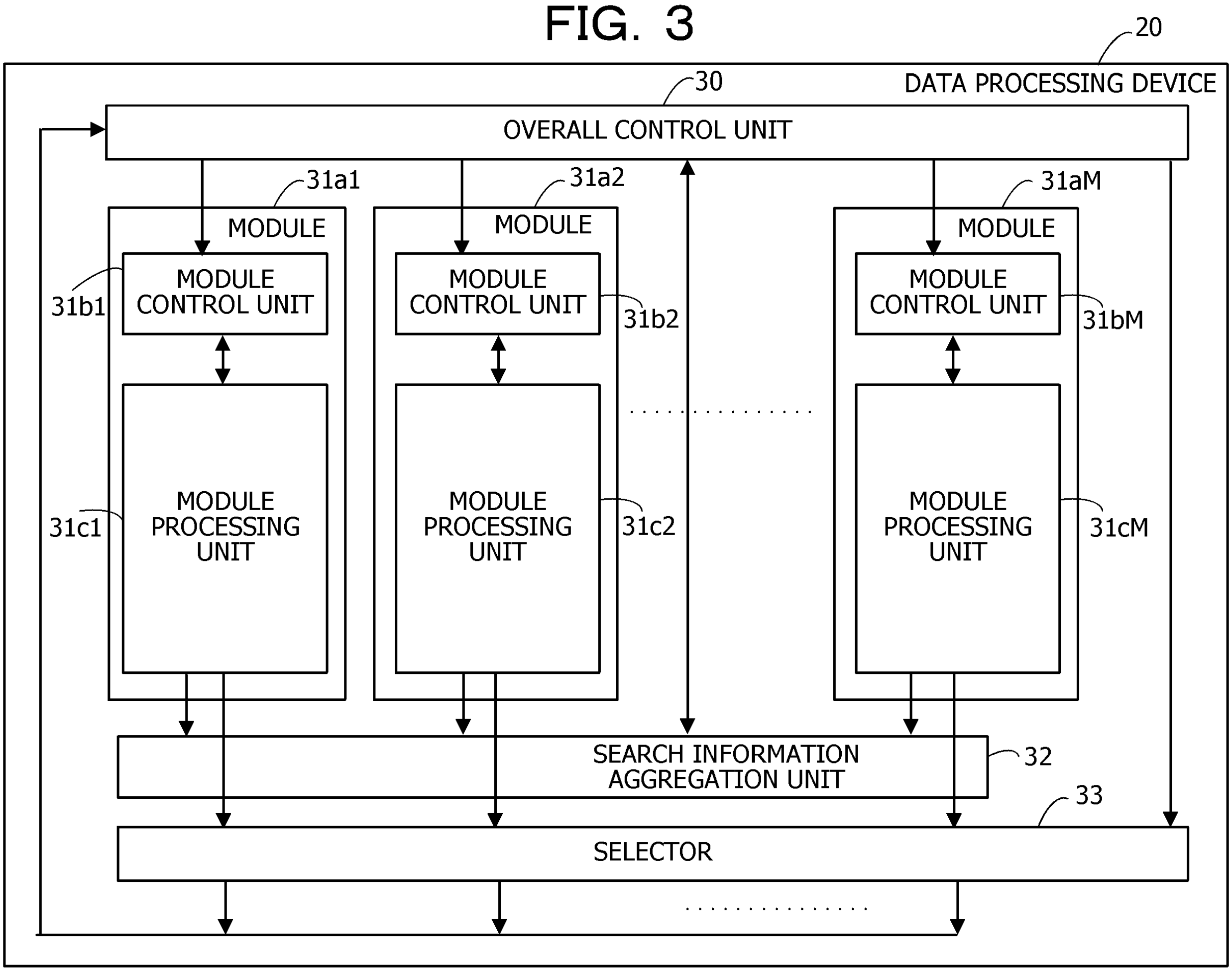
20
DATA PROCESSING DEVICE
30
OVERALL CONTROL UNIT
31a1
MODULE
31a2
MODULE
31aM
MODULE
31b1
MODULE CONTROL UNIT
MODULE CONTROL UNIT
31b2
MODULE CONTROL UNIT
31bM
31c1
MODULE PROCESSING UNIT
MODULE PROCESSING UNIT
31c2
MODULE PROCESSING UNIT
31cM
SEARCH INFORMATION AGGREGATION UNIT
32
33
SELECTOR

FIG. 4

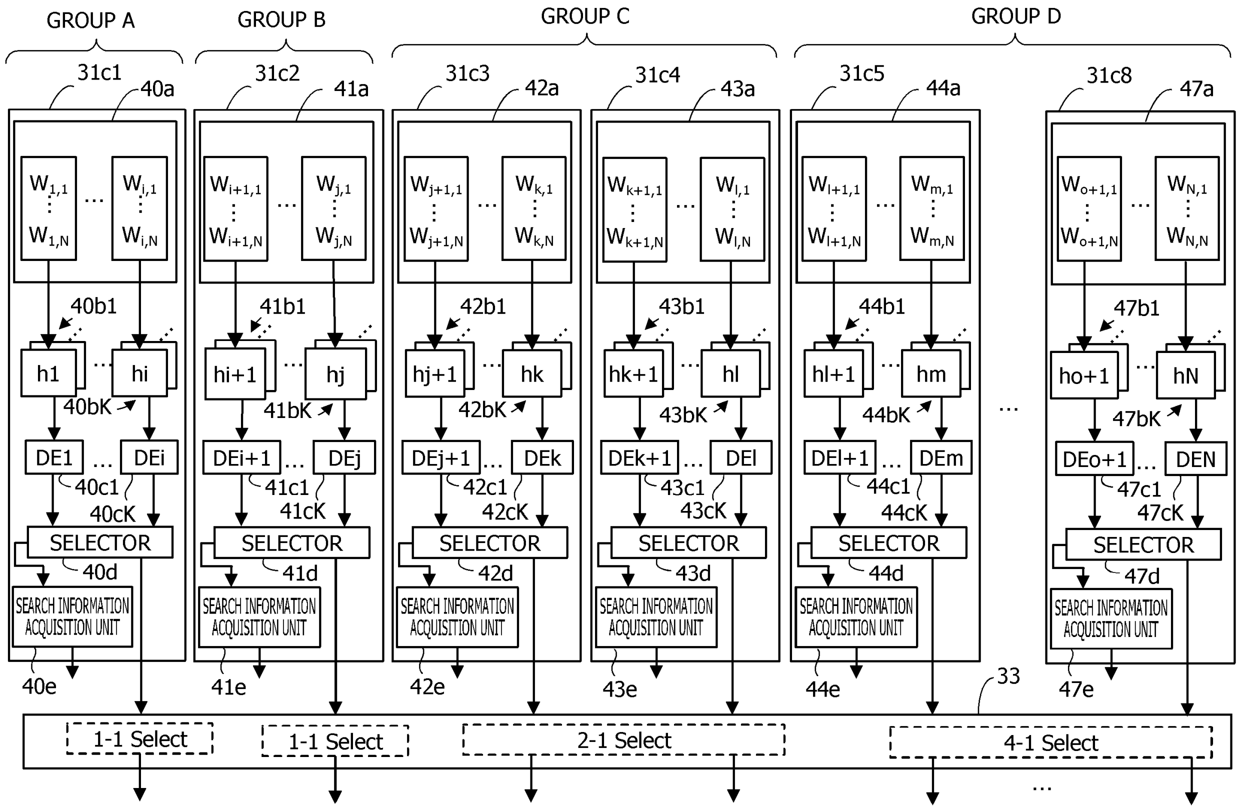
GROUP A
GROUP B
GROUP C
GROUP D
31c1
40a
31c2
41a
31c3
42a
31c4
43a
31c5
44a
31c8
47a
W1,1 … Wi,1
W1,N … Wi,N
Wi+1,1 … Wj,1
Wi+1,N … Wj,N
Wj+1,1 … Wk,1
Wj+1,N … Wk,N
Wk+1,1 … Wl,1
Wk+1,N … Wl,N
Wl+1,1 … Wm,1
Wl+1,N … Wm,N
Wo+1,1 … WN,1
Wo+1,N … WN,N
40b1
41b1
42b1
43b1
44b1
47b1
h1 … hi
hi+1 … hj
hj+1 … hk
hk+1 … hl
hl+1 … hm
ho+1 … hN
40bK
41bK
42bK
43bK
44bK
47bK
DE1 … DEi
DEi+1 … DEj
DEj+1 … DEk
DEk+1 … DEl
DEl+1 … DEm
DEo+1 … DEN
40c1
40cK
41c1
41cK
42c1
42cK
43c1
43cK
44c1
44cK
47c1
47cK
SELECTOR
40d
41d
42d
43d
44d
47d
SEARCH INFORMATION ACQUISITION UNIT
40e
41e
42e
43e
44e
47e
33
1-1 Select
1-1 Select
2-1 Select
4-1 Select

FIG. 5

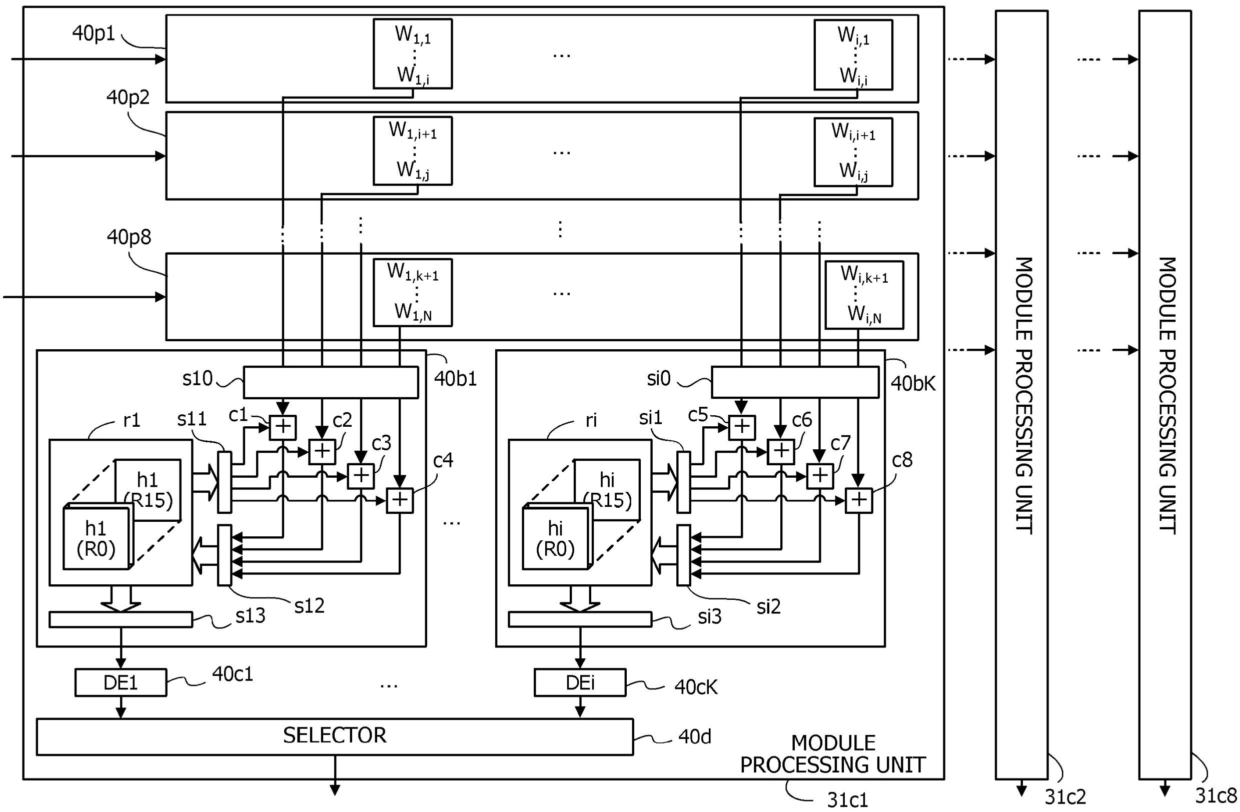
40p1
40p2
40p8
W1,1
W1,i
Wi,1
Wi,i
W1,i+1
W1,j
Wi,i+1
Wi,j
W1,k+1
W1,N
Wi,k+1
Wi,N
s10
40b1
si0
40bK
r1
s11
c1
c2
c3
c4
h1 (R15)
h1 (R0)
s12
s13
ri
si1
c5
c6
c7
c8
hi (R15)
hi (R0)
si2
si3
DE1
40c1
DEi
40cK
SELECTOR
40d
MODULE PROCESSING UNIT
31c1
MODULE PROCESSING UNIT
31c2
MODULE PROCESSING UNIT
31c8

FIG. 6

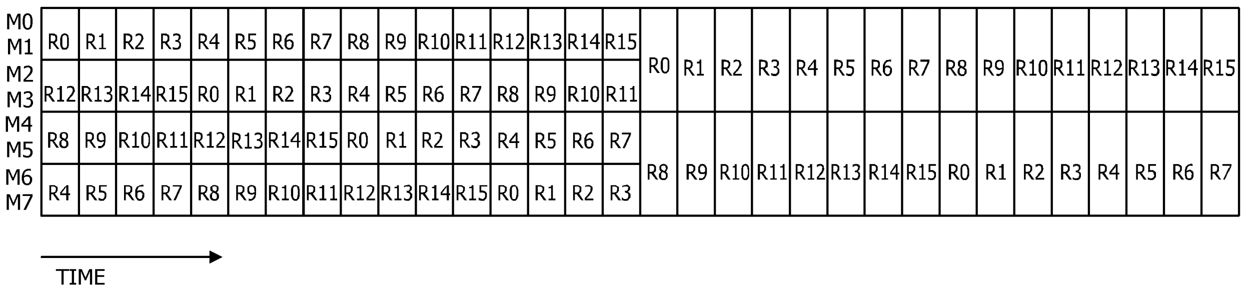
M0
M1
M2
M3
M4
M5
M6
M7
R0 R1 R2 R3 R4 R5 R6 R7 R8 R9 R10 R11 R12 R13 R14 R15
R12 R13 R14 R15 R0 R1 R2 R3 R4 R5 R6 R7 R8 R9 R10 R11
R8 R9 R10 R11 R12 R13 R14 R15 R0 R1 R2 R3 R4 R5 R6 R7
R4 R5 R6 R7 R8 R9 R10 R11 R12 R13 R14 R15 R0 R1 R2 R3
R0 R1 R2 R3 R4 R5 R6 R7 R8 R9 R10 R11 R12 R13 R14 R15
R8 R9 R10 R11 R12 R13 R14 R15 R0 R1 R2 R3 R4 R5 R6 R7
TIME

FIG. 7

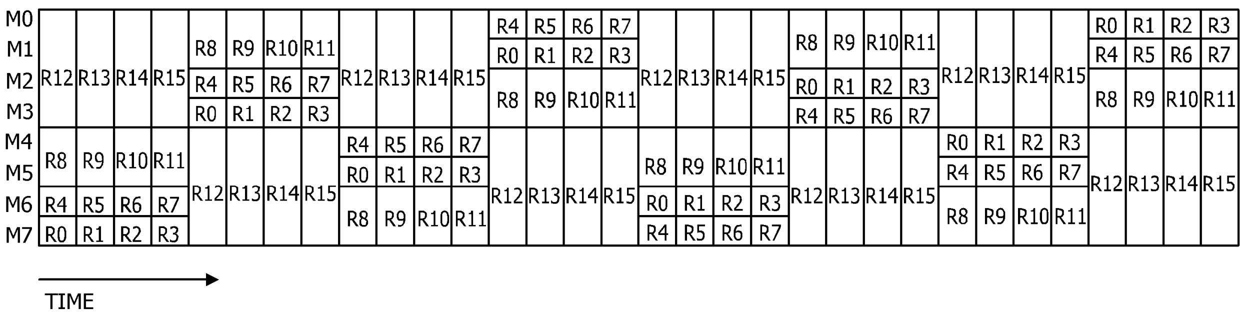
M0
M1
M2
M3
M4
M5
M6
M7
R0 R1 R2 R3 R4 R5 R6 R7 R8 R9 R10 R11 R12 R13 R14 R15
TIME

FIG. 8

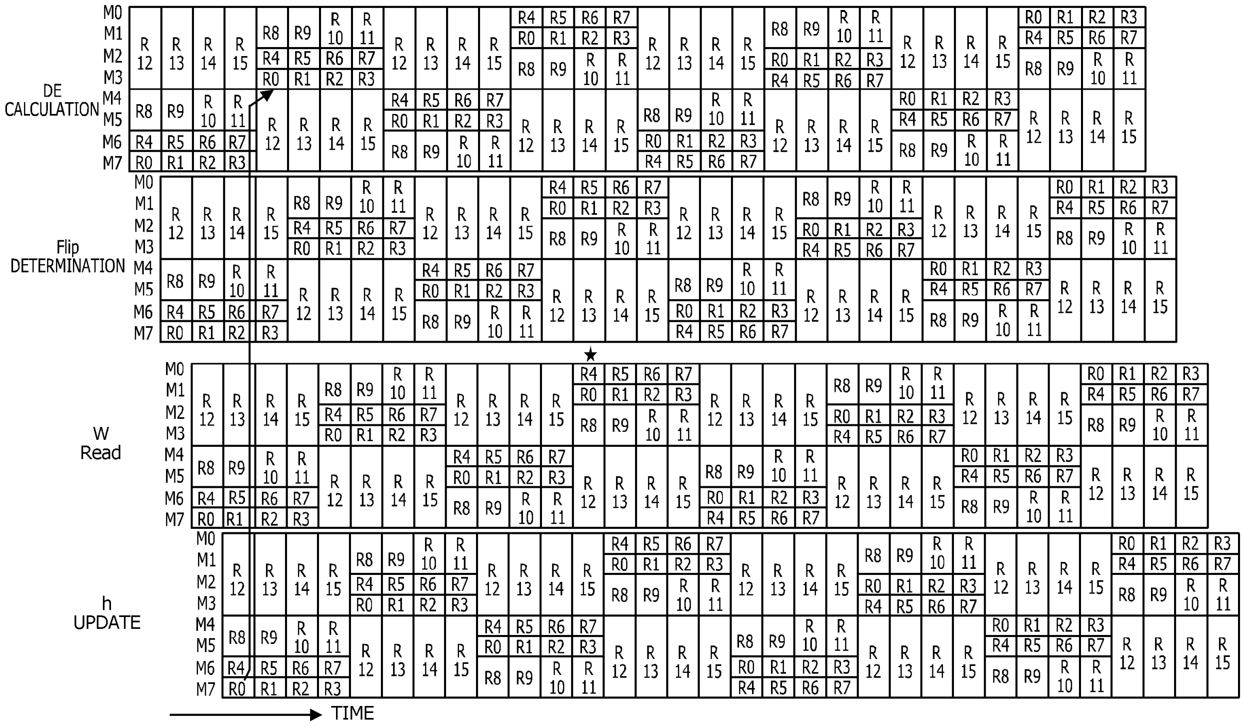
DE CALCULATION
Flip DETERMINATION
W Read
h UPDATE
M0
M1
M2
M3
M4
M5
M6
M7
TIME

FIG. 9

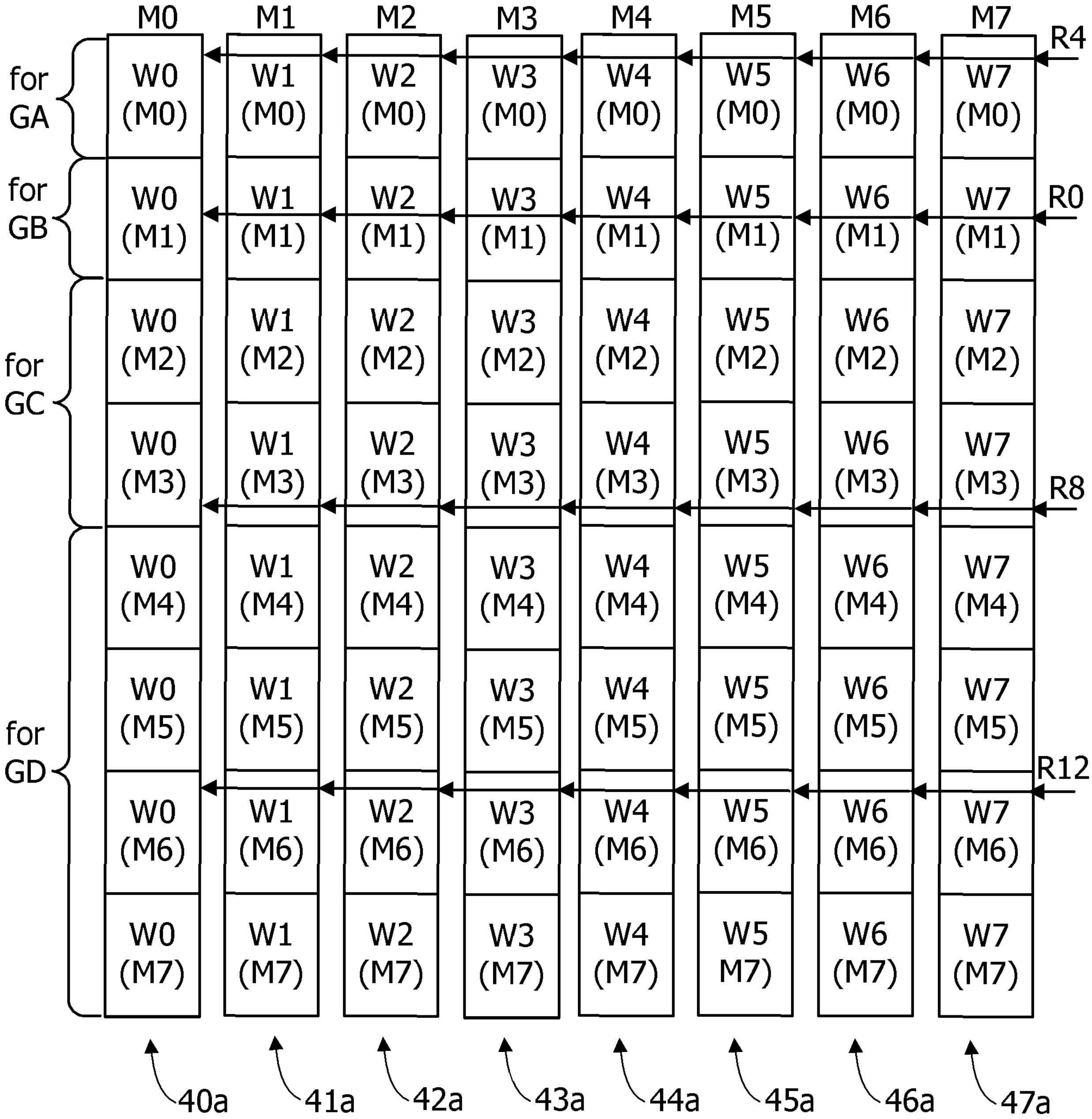
M0
M1
M2
M3
M4
M5
M6
M7
R4
R0
R8
R12
for GA
for GB
for GC
for GD
W0 (M0)
W1 (M0)
W2 (M0)
W3 (M0)
W4 (M0)
W5 (M0)
W6 (M0)
W7 (M0)
W0 (M1)
W1 (M1)
W2 (M1)
W3 (M1)
W4 (M1)
W5 (M1)
W6 (M1)
W7 (M1)
W0 (M2)
W1 (M2)
W2 (M2)
W3 (M2)
W4 (M2)
W5 (M2)
W6 (M2)
W7 (M2)
W0 (M3)
W1 (M3)
W2 (M3)
W3 (M3)
W4 (M3)
W5 (M3)
W6 (M3)
W7 (M3)
W0 (M4)
W1 (M4)
W2 (M4)
W3 (M4)
W4 (M4)
W5 (M4)
W6 (M4)
W7 (M4)
W0 (M5)
W1 (M5)
W2 (M5)
W3 (M5)
W4 (M5)
W5 (M5)
W6 (M5)
W7 (M5)
W0 (M6)
W1 (M6)
W2 (M6)
W3 (M6)
W4 (M6)
W5 (M6)
W6 (M6)
W7 (M6)
W0 (M7)
W1 (M7)
W2 (M7)
W3 (M7)
W4 (M7)
W5 M7)
W6 (M7)
W7 (M7)
40a
41a
42a
43a
44a
45a
46a
47a

FIG. 10

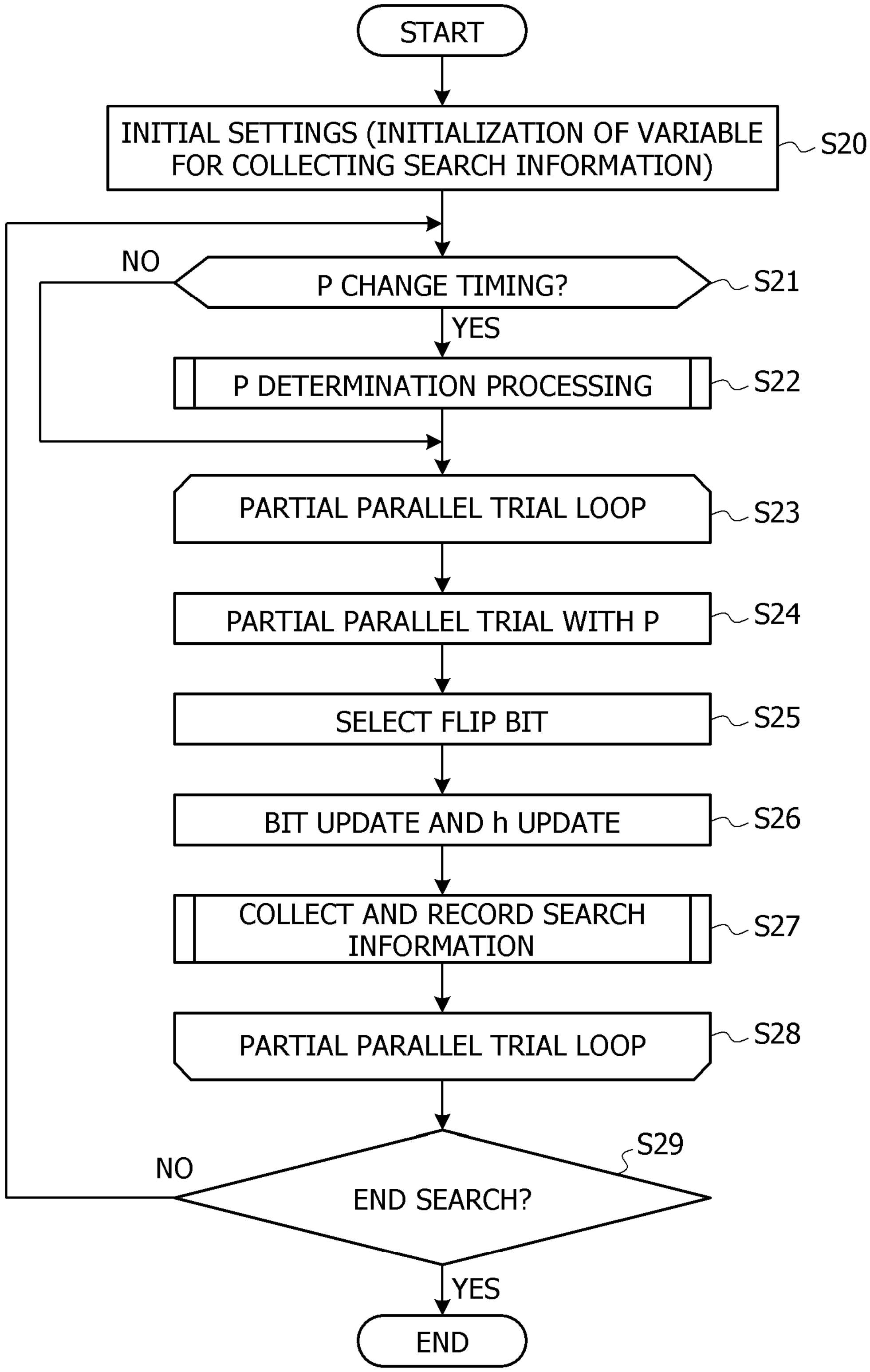
START
INITIAL SETTINGS (INITIALIZATION OF VARIABLE FOR COLLECTING SEARCH INFORMATION)
S20
P CHANGE TIMING?
S21
NO
YES
P DETERMINATION PROCESSING
S22
PARTIAL PARALLEL TRIAL LOOP
S23
PARTIAL PARALLEL TRIAL WITH P
S24
SELECT FLIP BIT
S25
BIT UPDATE AND h UPDATE
S26
COLLECT AND RECORD SEARCH INFORMATION
S27
PARTIAL PARALLEL TRIAL LOOP
S28
END SEARCH?
S29
NO
YES
END

FIG. 11

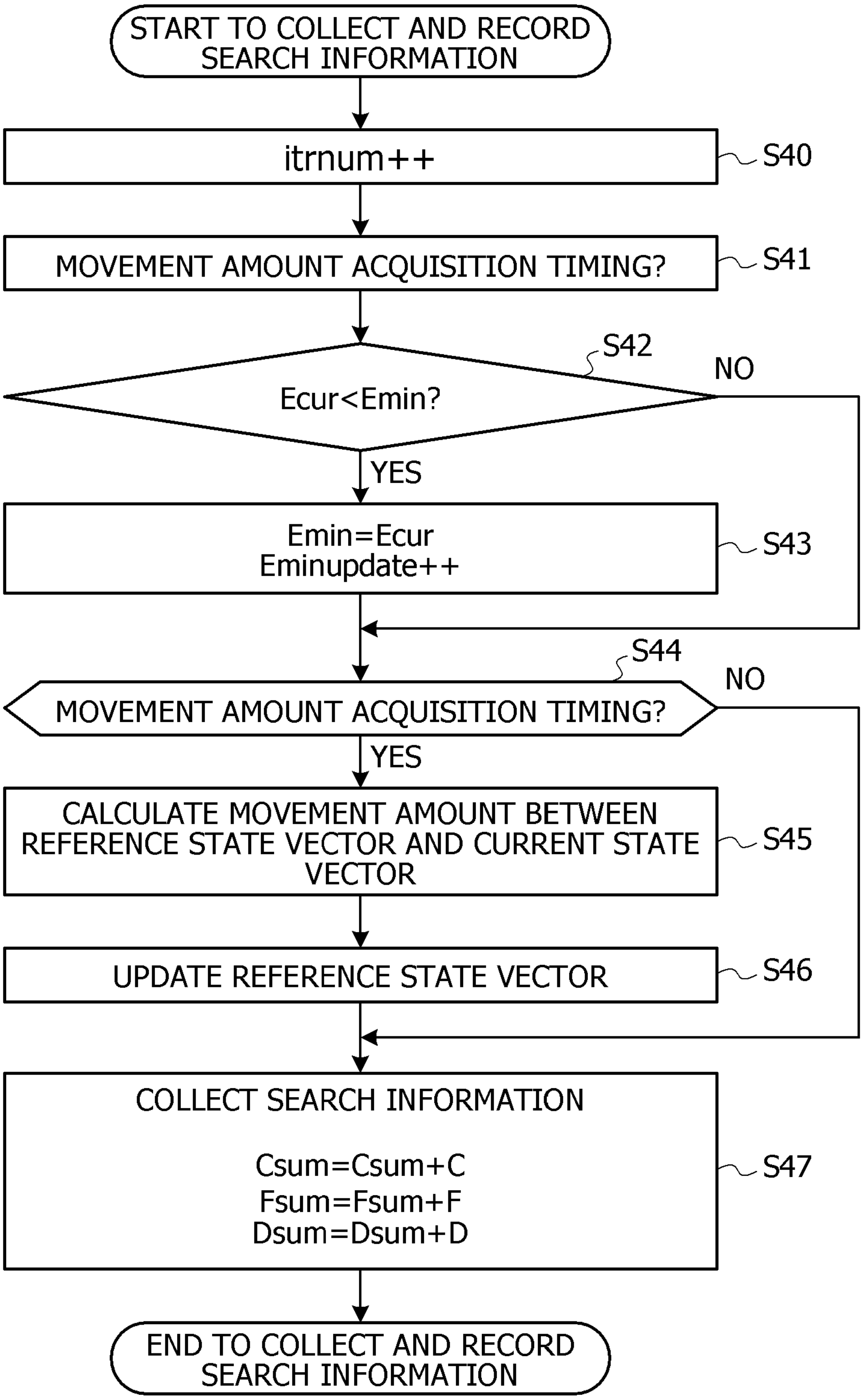
START TO COLLECT AND RECORD SEARCH INFORMATION
itrnum++
S40
MOVEMENT AMOUNT ACQUISITION TIMING?
S41
Ecur<Emin?
S42
NO
YES
Emin=Ecur
Eminupdate++
S43
MOVEMENT AMOUNT ACQUISITION TIMING?
S44
NO
YES
CALCULATE MOVEMENT AMOUNT BETWEEN REFERENCE STATE VECTOR AND CURRENT STATE VECTOR
S45
UPDATE REFERENCE STATE VECTOR
S46
COLLECT SEARCH INFORMATION
Csum=Csum+C
Fsum=Fsum+F
Dsum=Dsum+D
S47
END TO COLLECT AND RECORD SEARCH INFORMATION

FIG. 12

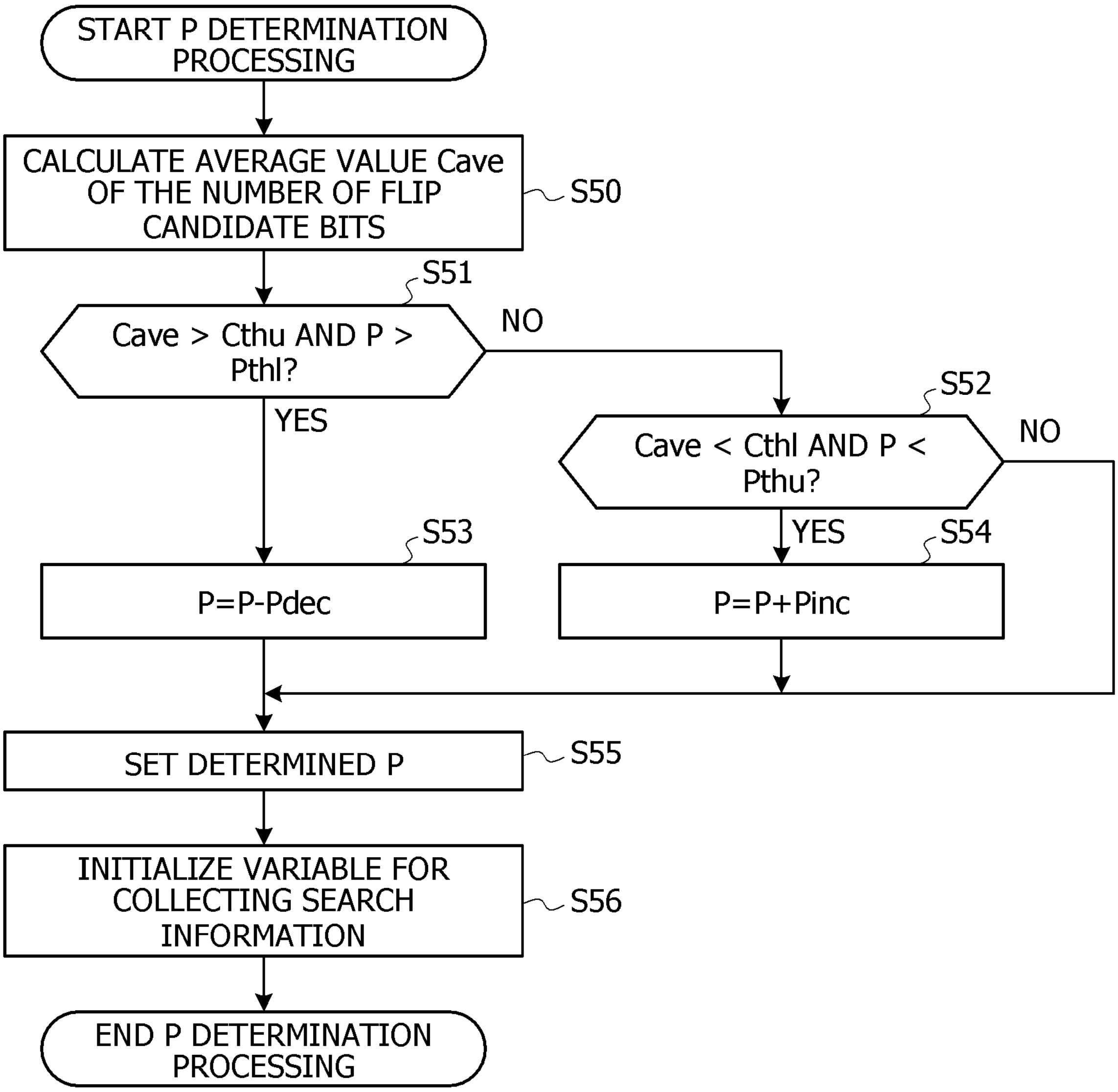
START P DETERMINATION PROCESSING
CALCULATE AVERAGE VALUE Cave OF THE NUMBER OF FLIP CANDIDATE BITS
S50
S51
Cave > Cthu AND P > Pthl?
NO
YES
S52
Cave < Cthl AND P < Pthu?
NO
YES
S53
P=P-Pdec
S54
P=P+Pinc
SET DETERMINED P
S55
INITIALIZE VARIABLE FOR COLLECTING SEARCH INFORMATION
S56
END P DETERMINATION PROCESSING

FIG. 13

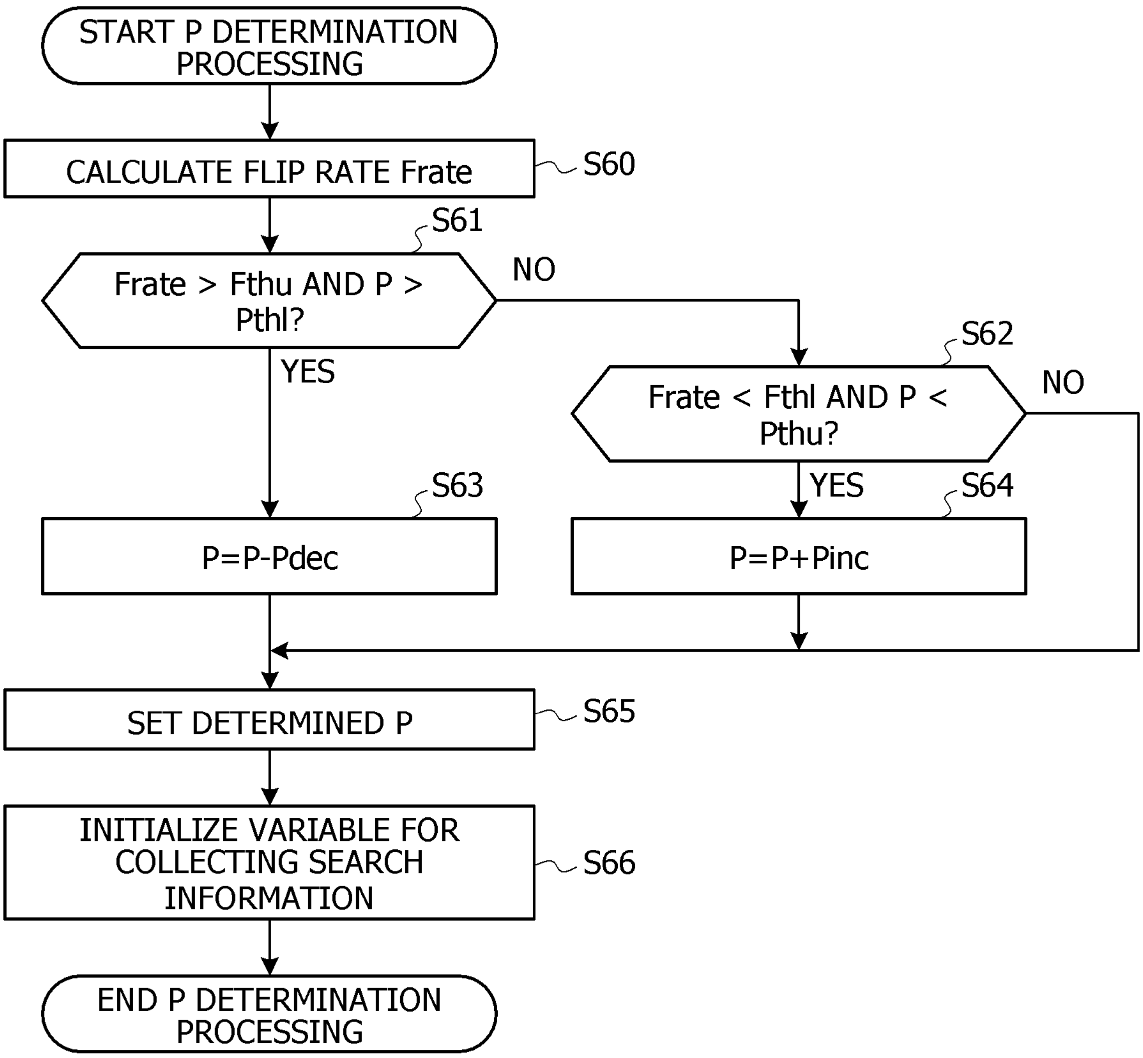
START P DETERMINATION PROCESSING
CALCULATE FLIP RATE Frate
S60
S61
Frate > Fthu AND P > Pthl?
NO
YES
S62
Frate < Fthl AND P < Pthu?
NO
YES
S63
S64
P=P-Pdec
P=P+Pinc
SET DETERMINED P
S65
INITIALIZE VARIABLE FOR COLLECTING SEARCH INFORMATION
S66
END P DETERMINATION PROCESSING

FIG. 14

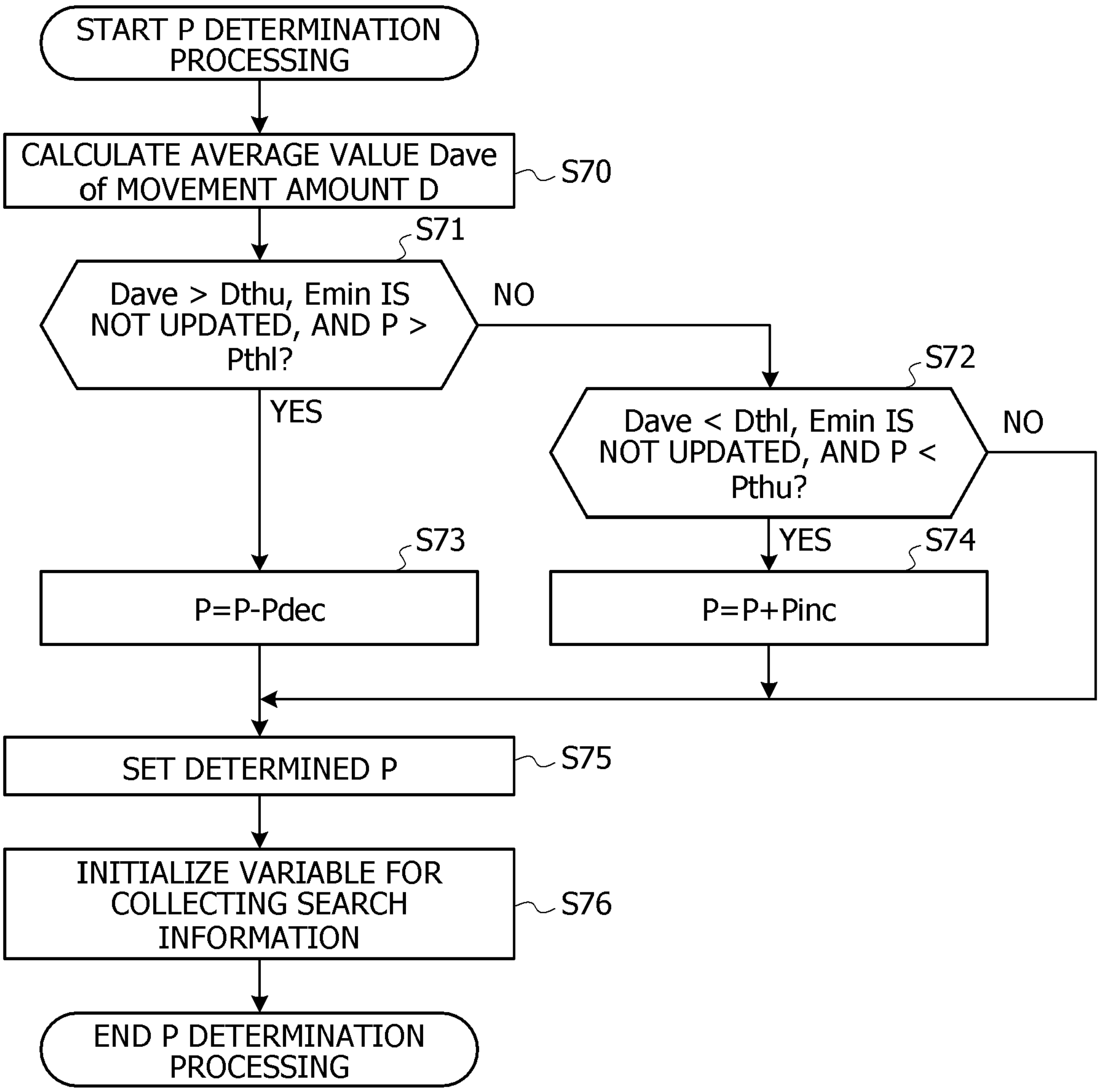
START P DETERMINATION PROCESSING
CALCULATE AVERAGE VALUE Dave of MOVEMENT AMOUNT D
S70
S71
Dave > Dthu, Emin IS NOT UPDATED, AND P > Pthl?
NO
YES
S72
Dave < Dthl, Emin IS NOT UPDATED, AND P < Pthu?
NO
YES
S73
P=P-Pdec
S74
P=P+Pinc
SET DETERMINED P
S75
INITIALIZE VARIABLE FOR COLLECTING SEARCH INFORMATION
S76
END P DETERMINATION PROCESSING

FIG. 15

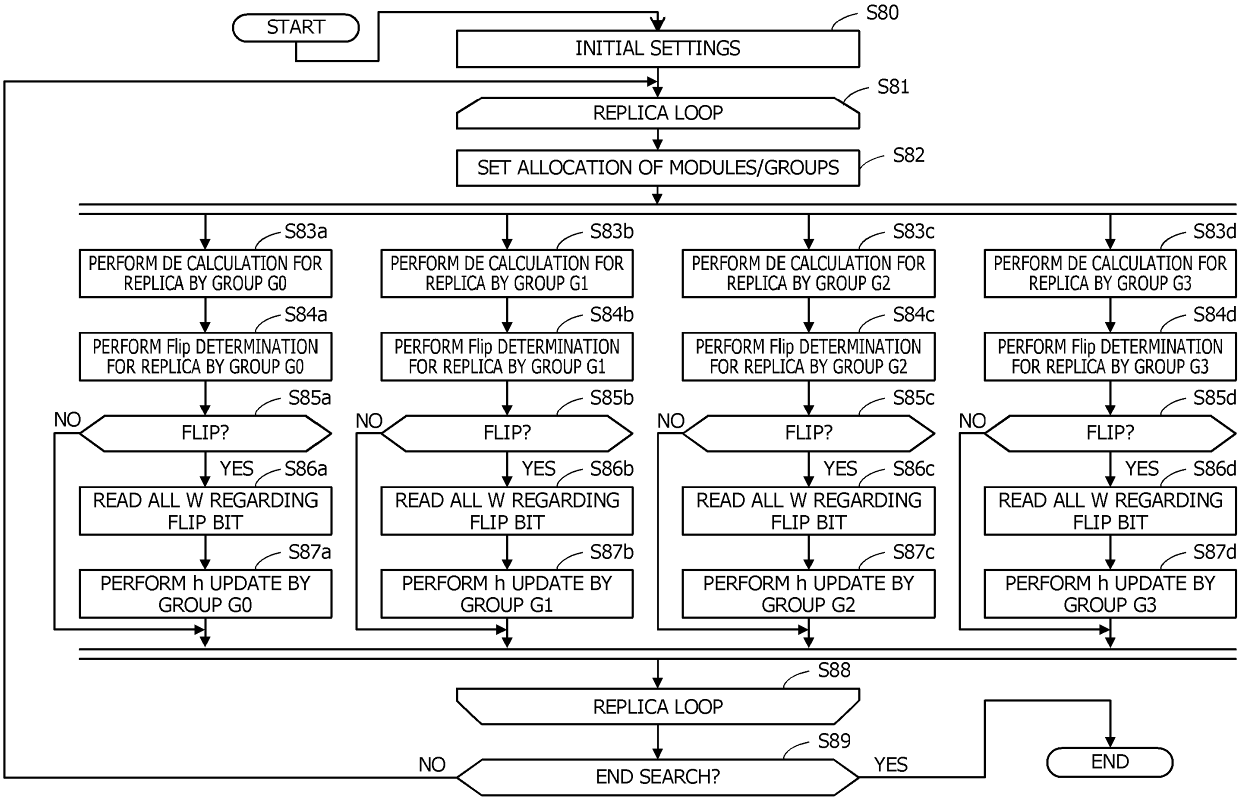
START
INITIAL SETTINGS
S80
REPLICA LOOP
S81
SET ALLOCATION OF MODULES/GROUPS
S82
PERFORM DE CALCULATION FOR REPLICA BY GROUP G0
S83a
PERFORM Flip DETERMINATION FOR REPLICA BY GROUP G0
S84a
FLIP?
S85a
NO
YES
READ ALL W REGARDING FLIP BIT
S86a
PERFORM h UPDATE BY GROUP G0
S87a
PERFORM DE CALCULATION FOR REPLICA BY GROUP G1
S83b
PERFORM Flip DETERMINATION FOR REPLICA BY GROUP G1
S84b
FLIP?
S85b
NO
YES
READ ALL W REGARDING FLIP BIT
S86b
PERFORM h UPDATE BY GROUP G1
S87b
PERFORM DE CALCULATION FOR REPLICA BY GROUP G2
S83c
PERFORM Flip DETERMINATION FOR REPLICA BY GROUP G2
S84c
FLIP?
S85c
NO
YES
READ ALL W REGARDING FLIP BIT
S86c
PERFORM h UPDATE BY GROUP G2
S87c
PERFORM DE CALCULATION FOR REPLICA BY GROUP G3
S83d
PERFORM Flip DETERMINATION FOR REPLICA BY GROUP G3
S84d
FLIP?
S85d
NO
YES
READ ALL W REGARDING FLIP BIT
S86d
PERFORM h UPDATE BY GROUP G3
S87d
REPLICA LOOP
S88
END SEARCH?
S89
NO
YES
END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020046997 A
- JP 2021033341 A
- JP 2021131695 A
- US 2020401738 A1


### Non-patent literature cited in the description


- Replica Exachange MCMC Hardware With Automatic Temperature Selection and Parallel Trial. **DABIRI KEIVAN et al.** EEE TRANSACTIONS ON PARALLEL AND DISTRIBUTED SYSTEMS. IEEE, 05 March 2020, vol. 31, 1681-1692